Europäisches Patentamt
European Patent Office
Office européen des brevets

(19)

(11) Veröffentlichungsnummer: **0 342 152 A2**

(12) **EUROPÄISCHE PATENTANMELDUNG**

(21) Anmeldenummer: **89810313.0**

(22) Anmeldetag: **26.04.89**

(51) Int. Cl.4: **C 09 B 57/10**
C 09 B 23/16, C 08 K 5/29

(30) Priorität: **03.05.88 CH 1650/88**

(43) Veröffentlichungstag der Anmeldung:
**15.11.89 Patentblatt 89/46**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Iqbal, Abul, Dr.**
**La Dey 202**
**CH-1732 Arconciel (CH)**

**Tanner, Martin, Dr.**
**Uf em Berg**
**CH-1734 Tentlingen (CH)**

(54) **In der Masse gefärbtes hochmolekulares organisches Material enthaltend Metallkomplexe, neue Metallkomplexe sowie Verfahren zu deren Herstellung.**

(57) Die 1:1 Metallkomplexe aus dem Liganden der Formel I

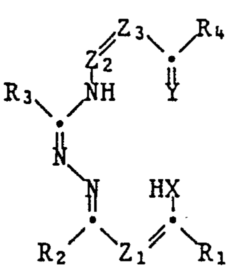

(I),

worin unabhängig voneinander $Z_1$ ein N-Atom oder die Gruppe C-$R_5$, $Z_2$ ein N-Atom oder die Gruppe C-$R_6$, und $Z_3$ bei $Z_2$ = C-$R_6$ ein N-Atom oder die Gruppe C-$R_5$ und $Z_3$ bei $Z_2$ = N die Gruppe C-$R_7$ bedeuten, wobei die Gruppen $Z_2$ und $Z_3$ nicht gleichzeitig ein N-Atom darstellen, X und Y unabhängig voneinander (wenn mit $R_1$ bzw. $R_4$ cyclisch gebunden) O, S oder NH oder, wenn mit $R_1$ bzw. $R_4$ cyclisch gebunden, ein N-Atom bedeuten, ferner Y unsubstituiertes oder durch nichtwasserlöslichmachende Gruppen substituiertes Phenylamino oder Naphthylamino ist, und ferner X mit $R_1$, Y mit $R_4$, $R_1$ mit $R_5$ (bei $Z_1$ = C-$R_5$), $R_4$ mit $R_5$ bzw. $R_4$ mit $R_7$ (bei $Z_3$ = C-$R_5$ bzw. C-$R_7$) und $R_6$ mit $R_5$ (bei $Z_2$ = C-$R_6$ und $Z_3$ = C-$R_5$) zusammen mit den jeweils benachbarten C-Atomen, woran diese Gruppen gebunden sind, ein carbocyclisches aromatisches Ringsystem oder ein heterocyclisches aromatisches 5- oder 6-gliedriges Ringsystem bilden, das ein O-, S-und/oder ein bis zwei N-Atome enthält und einen ankondensierten Benzolring oder einen weiteren heterocyclischen aromatischen 5- oder 6-gliedrigen Ring aufweisen kann, der seinerseits noch einen ankondensierten Benzolring aufweisen kann, ferner $R_1$ und $R_4$, wenn alleinstehend, unabhängig voneinander eine -H, $C_1$-$C_5$-Alkyl-, $C_1$-$C_5$-Alkoxy- oder $C_1$-$C_5$-Alkylamino-Gruppe, eine Aminogruppe, oder einen unsubstituierten oder durch nichtwasserlöslichmachende Gruppen substituierten Phenyl-, Naphthyl-, Benzylamino-, Naphthylamino- oder Phenylamino-Rest bedeuten, ferner $R_5$ -H, -CN, $C_1$-$C_5$-Alkyl, $C_7$-$C_9$-Phenylalkyl unsubstituiertes oder durch Halogen, $C_1$-$C_5$-Alkyl, $C_1$-$C_5$-Alkoxy, $-NO_2$ oder $-CF_3$ substituiertes Phenyl oder Naphthyl, oder $-COCH_3$, unsubstituiertes oder durch Halogen, $C_1$-$C_5$-Alkyl oder $C_1$-$C_5$-Alkoxy substituiertes Benzoyl, $C_2$-$C_6$-Alkoxycarbonyl, $-CONH_2$, -CONH-$C_1$-$C_5$-Alkyl, unsubstituiertes oder durch Halogen, $C_1$-$C_5$-Alkyl oder $C_1$-$C_5$-Alkoxy substituiertes Naphthylaminocarbonyl oder

EP 0 342 152 A2

Phenylaminocarbonyl ist, $R_2$, $R_3$ und $R_6$ unabhängig voneinander -H, $C_1$-$C_5$-Alkyl, $-NH_2$, $C_1$-$C_5$-Alkylamino, -OH, $C_1$-$C_5$-Alkoxy, -SH, $C_1$-$C_5$-Alkylmercapto, -CN, $C_2$-$C_6$-Alkoxycarbonyl, $-COCH_3$, $-CONH_2$, -CONH-$C_1$-$C_5$-Alkyl, oder unsubstituiertes oder durch Halogen, $C_1$-$C_5$-Alkyl oder $C_1$-$C_5$-Alkoxy substituiertes Phenyl, Naphthyl, Phenylamino, Naphthylamino, Phenylmercapto, Benzoyl, Naphthoyl oder Phenylaminocarbonyl sind, $R_7$ -H, $C_1$-$C_5$-Alkyl, oder unsubstituiertes oder durch Halogen, $C_1$-$C_5$-Alkyl oder $C_1$-$C_5$-Alkoxy substituiertes Phenyl oder Naphthyl ist, und das Metall ein zweiwertiges Ni-, Cu-, Co-, Zn-, Mn- oder Fe-Kation darstellt, eignen sich zum Färben von hochmolekularem organischem Material.

**Beschreibung**

**In der Masse gefärbtes hochmolekulares organisches Material enthaltend Metallkomplexe, neue Metallkomplexe sowie Verfahren zu deren Herstellung**

Die Erfindung betrifft in der Masse gefärbtes hochmolekulares organisches Material enthaltend Metallkomplexe mit 4-zähnigen Liganden, neue Metallkomplexe sowie Verfahren zu deren Herstellung.

Metallkomplexe und ihre Verwendung als Farbmittel zum Färben von hochmolekularen organischen Materialien sind seit langer Zeit dem Fachmann bekannt. Mehrere verschiedenartige Strukturtypen sind bereits vorgeschlagen worden, wobei darunter die Bisazomethin-Metallkomplexe insbesondere dank ihren guten allgemeinen Pigmenteigenschaften zu den bekanntesten Strukturtypen gehören.

Beispiele hierfür sind z.B. in den US-Patenten Nr. 2 993 065 und Nr. 3 132 140, in der DE-Offenlegungsschrift Nr. 2 008 938 und in der DE-Auslegeschrift Nr. 2 263 235 beschrieben. Ein strukturell gemeinsames Hauptmerkmal der dort offenbarten Verbindungen besteht darin, dass der Ligand vierzähnig ist und einen tricyclischen Chelat-Ring enthält, dessen N-Atome enthaltender Mittelteil ein ankondensiertes aromatisches Ringsystem aufweist.

Auch Liganden ohne ankondensierten aromatischen Ring im stickstoffenthaltenden Mittelteil ihres polycyclischen Chelat-Ringsystems sind bekannt, wie 4-zähnige Liganden mit z.B. Malondialdehydresten (vgl. DE-Auslegeschrift Nr. 1 047 964) oder Alkylendiamingruppen (vgl. GB-Patent Nr. 1 373 743), oder 2-zähnige Liganden mit z.B. Bishydrazidresten (vgl. US-Patent Nr. 3 988 323).

Obwohl sich die oben aufgeführten Metallkomplexe als Farbmittel zum Einfärben von hochmolekularem organischem Material allgemein eignen, vermögen sie den heutigen Anforderungen der Praxis nicht immer zu genügen.

Es ist nun gefunden worden, dass sich vierzähnige Metallkomplexe mit einem ebenfalls tricyclischen Chelat-Ringsystem, dessen stickstoffenthaltender Mittelteil allerdings einen Amidazin- bzw. Formazan-Rest aufweist, durch gute allgemeine Pigmenteigenschaften auszeichnen.

Die Erfindung betrifft demnach in der Masse gefärbtes hochmolekulares organisches Material enthaltend mindestens einen 1:1 Metallkomplex aus einem Liganden der Formel I

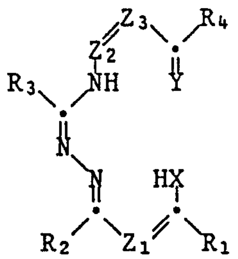

(I),

worin unabhängig voneinander $Z_1$ ein N-Atom oder die Gruppe C-$R_5$, $Z_2$ ein N-Atom oder die Gruppe C-$R_6$, und $Z_3$ bei $Z_2$ = C-$R_6$ ein N-Atom oder die Gruppe C-$R_5$ und $Z_3$ bei $Z_2$ = N die Gruppe C-$R_7$ bedeuten, wobei die Gruppen $Z_2$ und $Z_3$ nicht gleichzeitig ein N-Atom darstellen, X und Y unabhängig voneinander (wenn mit $R_1$ bzw. $R_4$ nicht cyclisch gebunden) O, S oder NH oder, wenn mit $R_1$ bzw. $R_4$ cyclisch gebunden, ein N-Atom bedeuten, ferner Y unsubstituiertes oder durch nichtwasserlöslichmachende Gruppen substituiertes Phenylamino oder Naphthylamino ist, und ferner X mit $R_1$, Y mit $R_4$, $R_1$ mit $R_5$ (bei $Z_1$ = C-$R_5$), $R_4$ mit $R_5$ bzw. $R_4$ mit $R_7$ (bei $Z_3$ = C-$R_5$ bzw. C-$R_7$) und $R_6$ mit $R_5$ (bei $Z_2$ = C-$R_6$ und $Z_3$ = C-$R_5$) zusammen mit den jeweils benachbarten C-Atomen, woran diese Gruppen gebunden sind, ein carbocyclisches aromatisches Ringsystem oder ein heterocyclisches aromatisches 5- oder 6-gliedriges Ringsystem bilden, das ein O-, S- und/oder ein bis zwei N-Atome enthält und einen ankondensierten Benzolring oder einen weiteren heterocyclischen aromatischen 5- oder 6-gliedrigen Ring aufweisen kann, der seinerseits noch einen ankondensierten Benzolring aufweisen kann, ferner $R_1$ und $R_4$, wenn alleinstehend, unabhängig vonein ander -H, eine $C_1$-$C_5$-Alkyl-, $C_1$-$C_5$-Alkoxy- oder $C_1$-$C_5$-Alkylamino-Gruppe, eine Aminogruppe oder einen unsubstituierten oder durch nichtwasserlöslichmachende Gruppen substituierten Phenyl-, Naphthyl-, Benzylamino-, Naphthylamino- oder Phenylamino-Rest bedeuten, ferner $R_5$ -H, -CN, $C_1$-$C_5$-Alkyl, $C_7$-$C_9$-Phenylalkyl, unsubstituiertes oder durch Halogen, $C_1$-$C_5$-Alkyl, $C_1$-$C_5$-Alkoxy, -$NO_2$ oder -$CF_3$ substituiertes Phenyl oder Naphthyl, oder -$COCH_3$, unsubstituiertes oder durch Halogen, $C_1$-$C_5$-Alkyl oder $C_1$-$C_5$-Alkoxy substituiertes Benzoyl, $C_2$-$C_6$-Alkoxycarbonyl, -$CONH_2$, -CONH-$C_1$-$C_5$-Alkyl, unsubstituiertes oder durch Halogen, $C_1$-$C_5$-Alkyl oder $C_1$-$C_5$-Alkoxy substituiertes Naphthylaminocarbonyl oder Phenylaminocarbonyl ist, $R_2$, $R_3$ und $R_6$ unabhängig voneinander -H, $C_1$-$C_5$-Alkyl, -$NH_2$, $C_1$-$C_5$-Alkylamino, -OH, $C_1$-$C_5$-Alkoxy, -SH, $C_1$-$C_5$-Alkylmercapto, -CN, $C_2$-$C_6$-Alkoxycarbonyl, -$COCH_3$, -$CONH_2$, -CONH-$C_1$-$C_5$-Alkyl, oder unsubstituiertes oder durch Halogen, $C_1$-$C_5$-Alkyl oder $C_1$-$C_5$-Alkoxy substituiertes Phenyl, Naphthyl, Phenylamino, Naphthylamino, Phenylmercapto, Benzoyl, Naphthoyl oder Phenylaminocarbonyl sind, $R_7$ -H, $C_1$-$C_5$-Alkyl, oder unsubstituiertes oder durch Halogen, $C_1$-$C_5$-Alkyl oder $C_1$-$C_5$-Alkoxy substituiertes Phenyl oder Naphthyl ist, und das Metall ein zweiwertiges Ni-, Cu-, Co-, Zn-, Mn- oder Fe-Kation darstellt.

Beispiele für carbocyclische und heterocyclische aromatische Ringsysteme sind Phenyl- oder Naphthylreste, Pyrazol-, Pyrazolon-, Pyridin-, Pyridon-, Pyrimidin-, Pyrimidon-, Chinolin-, Cumarin-, Benzimidazol-, Indolon-, Indandion-, Benzoxazol- und Benzthiazolreste, welche ihrerseits weiter substituiert sein können, z.B. durch ein bis zwei Halogenatome und/oder Methyl- oder Methoxygruppen.

Halogen in den verschiedenen Definitionen ist z.B. Brom, Jod und insbesondere Chlor.

Bedeuten $R_1$ bis $R_7$ $C_1$-$C_5$-Alkyl oder enthalten die Alkylaminoreste $R_1$, $R_2$, $R_3$, $R_4$ und $R_6$ $C_1$-$C_5$-Alkyl, so handelt es sich z.B. um Methyl, Aethyl, n-Propyl, Isopropyl, n-Butyl oder n-Pentyl.

Sind $R_1$, $R_2$, $R_3$, $R_4$ und $R_6$ $C_1$-$C_5$-Alkoxy, so handelt es sich z.B. um Methoxy, Aethoxy, n-Propoxy, Isopropoxy, n-Butoxy oder n-Pentoxy.

Sind die Phenyl-, Naphthyl-, Phenylamino-, Naphthylamino-, Phenylmercapto-, Benzoyl-, Naphthoyl- oder Phenylaminocarbonyl-Reste, die bei $R_2$ bis $R_7$ vorkommen können, durch $C_1$-$C_5$-Alkyl oder $C_1$-$C_5$-Alkoxy substituiert, so handelt es sich um die gleichen Beispiele, die bereits oben aufgeführt sind.

$C_1$-$C_5$-Alkylmercapto als $R_2$, $R_3$ und $R_6$ sind z.B. Methyl-, Aethyl-, n-Propyl- oder n-Butyl-mercapto.

Stellen $R_2$, $R_3$, $R_5$ und $R_6$ $C_2$-$C_6$-Alkoxycarbonyl dar, so handelt es sich z.B. um Methoxy-, Aethoxy-, n-Propoxy- oder n-Butoxy-carbonyl.

Stellen $R_2$, $R_3$, $R_5$ und $R_6$ -CONH-$C_1$-$C_5$-Alkyl dar, so handelt es sich beim $C_1$-$C_5$-Alkylteil z.B. um Methyl, Aethyl, n-Propyl, Isopropyl, n-Butyl oder n-Pentyl.

Nichtwasserlöslichmachende Gruppen, die bei der Definition der Gruppen Y, $R_1$ und $R_4$ vorkommen können, sind dem Pigmentfachmann bekannt. Beispiele hierfür sind nachstehend bei der Definition der Gruppen $X_4$ und $X_5$ in den Formeln $NC$-$CH_2$-$R_{20}$ und $R_{20}$-$CH_2$-$R_{21}$ aufgeführt.

Naphthyl in $R_1$ bis $R_6$ ist ß- oder bevorzugt $\alpha$-Naphthyl. $C_7$-$C_9$-Phenylalkyl in $R_5$ ist z.B. Phenylaethyl und insbesondere Benzyl.

Erfindungsgemäss bevorzugtes hochmolekulares organisches Material enthält Metallkomplexe aus einem Liganden der Formel I, worin $R_2$ und $R_3$ unabhängig voneinander -H, $-CH_3$ oder Phenyl bedeuten, $Z_2$ für den Rest C-$R_6$ steht, wobei $R_6$ -H, $-CH_3$ oder Phenyl ist, und X O ist, und die weiteren Symbole die oben angegebene Definition haben.

$R_2$ und $R_3$ bedeuten ganz bevorzugt -H, und $Z_2$ steht bevorzugt für den Rest C-H.

Das Metallkation steht bevorzugt für Nickel.

Metallkomplexe mit einem Liganden der Formel I, in welcher $R_3$ -SH, $-SCH_3$, $-SC_2H_5$, $-SC_3H_7$, $-SCH_2C_6H_5$, $-SCOCH_3$, -OH, $-NH_2$ und $-NHCH_3$, $R_2$ -H, $Z_2$ C-H, X und Y O, $Z_1$ und $Z_3$ C-$R_5$ bedeuten, wobei $R_1$ mit $R_5$ und $R_4$ mit $R_5$ zusammen mit den jeweils benachbarten C-Atomen, woran diese Gruppen gebunden sind, einen Benzol- und/oder Naphthalinrest bilden, und das Metall ein zweiwertiges Ni-, Cu- und Zn-Kation ist, sind bekannt und in mehreren russischen Publikationen [vgl. z.B.Cristallografiya 23 (1), S. 195-197 (1978) oder Zh.Neorg.Khim. 17(8), 2176-80 (1972), 19(10), 2761-2768 (1974),20(5), 1417-20 (1975) und 24(4), 982-987 (1979), oder SU 1154276 (Prior.SU 10.06.1983)] beschrieben. In Polyhedron Vol. 6, Nr. 10, S. 1901-1907 (1987) ist ferner der Nickelkomplex mit einem Liganden der Formel I, in welcher $R_3$ $-SCH_3$, $R_1$ und $R_2$ $-CH_3$, $Z_1$ und $Z_2$ C-H, X und Y O und $Z_3$ C-$R_5$ bedeuten, und $R_4$ und $R_5$ zusammen mit den jeweils benachbarten C-Atomen, woran diese Gruppen gebunden sind, einen Benzolrest bilden, beschrieben. In all diesen Literaturstellen wird über die Synthese und einige Eigenschaften, insbesondere die magnetischen Eigenschaften, dieser Metall-Komplexe referiert, ihre Verwendung als Farbmittel ist aber nicht erwähnt.

Die übrigen Metallkomplexe mit einem Liganden der Formel I dagegen sind neu und stellen daher einen weiteren Erfindungsgegenstand dar, wobei der Ligand die folgende Formel II

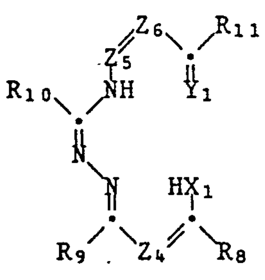

(II)

aufweist,

worin unabhängig voneinander $Z_4$ ein N-Atom oder die Gruppe C-$R_{12}$, $Z_5$ ein N-Atom oder die Gruppe C-$R_{13}$, und $Z_6$ bei $Z_5$ = C-$R_{13}$ ein N-Atom oder die Gruppe C-$R_{12}$ oder $Z_6$ bei $Z_5$ = N die Gruppe C-$R_{14}$ bedeuten, wobei die Gruppen $Z_5$ und $Z_6$ nicht gleichzeitig ein N-Atom sind, $X_1$ und $Y_1$ unabhängig voneinander (wenn mit $R_8$ bzw. $R_{11}$ nicht cyclisch gebunden) O, S oder NH, oder, wenn mit $R_8$ bzw. $R_{11}$ cyclisch gebunden, ein N-Atom bedeuten, ferner $Y_1$ unsubstituiertes oder durch nicht wasserlöslich machende Gruppen substituiertes Phenylamino oder Naphthylamino ist, ferner $X_1$ mit $R_8$, $Y_1$ mit $R_{11}$, sowie $R_8$ mit $R_{12}$ (bei $Z_4$ = C-$R_{12}$), $R_{11}$ mit $R_{12}$ bzw. $R_{11}$ mit $R_{14}$ (bei $Z_6$ = C-$R_{12}$ bzw. C-$R_{14}$) und $R_{13}$ mit $R_{12}$ (bei $Z_5$ = C-$R_{13}$ und $Z_6$ = C-$R_{12}$) zusammen mit den jeweils benachbarten C-Atomen, woran diese Gruppen gebunden sind, ein carbocyclisches aromatisches Ringsystem oder ein heterocyclisches aromatisches 5- oder 6-gliedriges Ringsystem bilden, das ein O-, S- und/oder ein bis zwei N-Atome enthält und einen ankondensierten Benzolring oder einen weiteren heterocyclischen aromatischen 5- oder 6-gliedrigen Ring aufweisen kann, der seinerseits noch einen ankondensierten Benzolring aufweisen kann, ferner $R_8$ und $R_{11}$, wenn alleinstehend,

unabhängig voneinander -H, eine $C_1$-$C_5$-Alkyl-, $C_1$-$C_5$-Alkoxy- oder $C_1$-$C_5$-Alkylaminogruppe, eine Aminogruppe oder einen unsubstituierten oder durch nicht wasserlöslichmachende Gruppen substituierten Phenyl-, Naphthyl-, Benzylamino-, Naphthylamino-oder Phenylamino-Rest bedeuten, ferner $R_{12}$ -H, -CN, $C_1$-$C_5$-Alkyl, $C_7$-$C_9$-Phenylalkyl, unsubstituiertes oder durch Halogen, $C_1$-$C_5$-Alkyl, $C_1$-$C_5$-Alkoxy, $-NO_2$ oder $-CF_3$ substituiertes Phenyl oder Naphthyl, oder $-COCH_3$, unsubstituiertes oder durch Halogen, $C_1$-$C_5$-Alkyl oder $C_1$-$C_5$-Alkoxy substituiertes Benzoyl, $C_2$-$C_6$-Alkoxycarbonyl, $-CONH_2$, -CONH-$C_1$-$C_5$-Alkyl, unsubstituiertes oder durch Halogen, $C_1$-$C_5$-Alkyl oder $C_1$-$C_5$-Alkoxy substituiertes Naphthylaminocarbonyl oder Phenylaminocarbonyl ist, $R_9$, $R_{10}$ und $R_{13}$ unabhängig voneinander -H, $C_1$-$C_5$-Alkyl, $-NH_2$, $C_1$-$C_5$-Alkylamino, -OH, $C_1$-$C_5$-Alkoxy, -SH, $C_1$-$C_5$-Alkylmercapto, -CN, $C_2$-$C_6$-Alkoxycarbonyl, $-COCH_3$, $-CONH_2$, -CONH-$C_1$-$C_5$-Alkyl, oder unsubstituiertes oder durch Halogen, $C_1$-$C_5$-Alkyl oder $C_1$-$C_5$-Alkoxy substituiertes Phenyl, Naphthyl, Phenylamino, Naphthylamino, Phenylmercapto, Benzoyl, Naphthoyl oder Phenylaminocarbonyl sind, $R_{14}$ -H, $C_1$-$C_5$-Alkyl oder unsubstituiertes oder durch Halogen, $C_1$-$C_5$-Alkyl oder $C_1$-$C_5$-Alkoxy substituiertes Phenyl oder Naphthyl ist, und das Metall ein zweiwertiges Ni-, Cu-, Co-, Zn-, Mn- oder Fe-Kation darstellt, wobei, wenn $R_9$ -H, $Z_5$ C-H, $X_1$ und $Y_1$ O und $Z_4$ und $Z_6$ C-$R_{12}$ sind, und $R_8$ mit $R_{12}$ und $R_{11}$ mit $R_{12}$ zusammen mit den jeweils benachbarten C-Atomen, woran diese Gruppen gebunden sind, einen Benzol- und/oder Naphthalinrest bilden und das Metall ein zweiwertiges Ni-, Cu- und Zn-Kation ist, $R_{10}$ keine HS-, $H_3CS$-, $H_5C_2S$-, $H_7C_3S$-, $H_5C_6H_2CS$-, $H_3CCOS$-, HO-, $H_2N$- und $H_3CNH$-Gruppe darstellen darf, und wenn $R_8$ und $R_9$ $-CH_3$, $R_{10}$ $-SCH_3$, $Z_4$ und $Z_5$ C-H, $X_1$ und $Y_1$ O und $Z_6$ C-$R_{12}$ bedeuten, und $R_{11}$ mit $R_{12}$ zusammen mit den jeweils benachbarten C-Atomen, woran diese Gruppen gebunden sind, einen Benzolrest bilden, das Metall kein Nickelkation sein darf.

Erfindungsgemäss bevorzugte Liganden der Formel II weisen die gleichen Definitionen auf, die oben für die Bevorzugung der Liganden der Formel I angegeben sind, und das erfindungsgemäss bevorzugte Metallkation steht für Nickel.

Die oben dargestellten Formeln I und II stellen eine der möglichen tautomeren Formen dar.

Die Metallkomplexe mit den Liganden der Formel I können nach verschiedenen Verfahren hergestellt werden.

a) Ein wichtiges Verfahren besteht darin, dass man z.B. ein α-Hydroxy-Keton oder -Aldehyd der Formel III

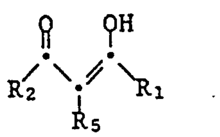

(III)

mit Hydrazin nach an und für sich bekannten Reaktionsbedingungen reagieren lässt und das so erhaltene Hydrazon der Formel IV

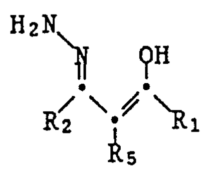

(IV)

z.B. mit einem Trialkyl-orthocarbonsäureester der Formel $R_3$-C(OAlkyl)$_3$ oder einem Amidin der Formel $R_3$-C(=NH)$NH_2$ umsetzt, das entstandene Produkt der Formel V mit einem zweiwertigen Metallkation, z.B. einem Metallacetat, und mit einem Amidin der Formel VI oder einem Salz davon, z.B. Formamidinacetat oder Benzamidin, in einer Template-Reaktion zu einem Produkt der Formel VII nach folgendem Scheme

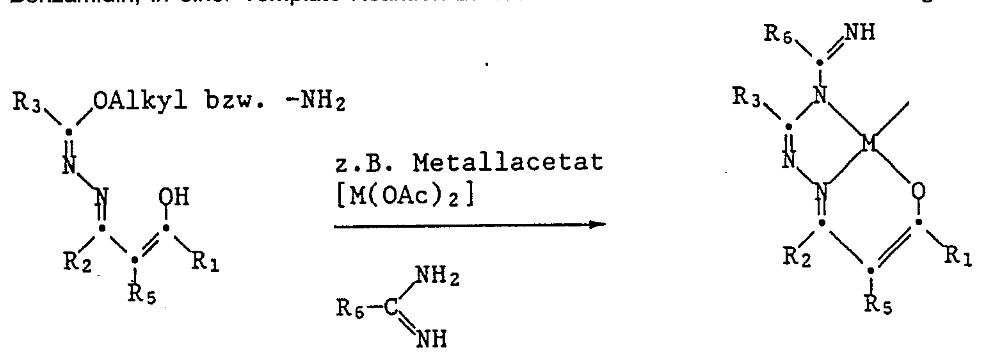


(V) (VI) (VII)

umsetzt, welches dann durch Reaktion mit einer methylenaktiven Verbindung z.B. der Formel VIII oder einer Verbindung der Formel IX zu einem erfindungsgemässen Metallkomplex der Formel I′ nach dem folgenden Schema

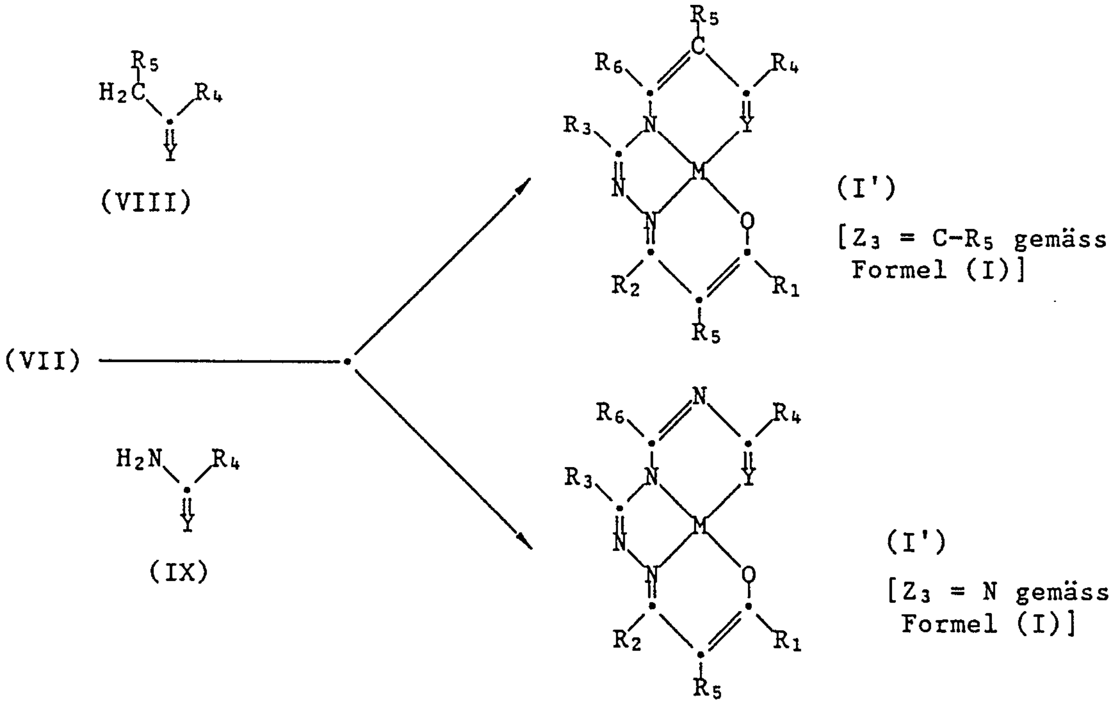

(VIII)

(VII)

(IX)

(I')

[$Z_3$ = C-$R_5$ gemäss Formel (I)]

(I')

[$Z_3$ = N gemäss Formel (I)]

umgesetzt wird.

In der Formeln III bis IX bedeuten zweckmässig $R_2$ -H, $C_1$-$C_5$-Alkyl, Phenyl oder Naphthyl, und $R_3$ und $R_6$ -H, Phenyl oder $C_1$-$C_5$-Alkyl; die übrigen Reste $R_1$/$R_5$ (Formeln III, IV, V und VII), sowie $R_4$ und Y (Formeln VIII und IX) haben die oben angegebene Bedeutung. Alkyl im Orthocarbonsäureesterrest bedeutet z.B. $C_1$-$C_5$-Alkyl, insbesondere aber Aethyl.

b) Ein weiteres Verfahren zur Herstellung der Metallkomplexe mit einem Liganden der Formel I besteht darin, dass man eine Verbindung der Formel VI oder ein Nitril der Formel $R_6$-CN sequenziell zuerst mit einer Verbindung der Formeln VIII oder IX und anschliessend mit einer Verbindung der Formel X zu einem Zwischenprodukt der Formeln XI oder XII umsetzt, welches dann z.B. durch Reaktion mit einer Verbindung der Formel III in Gegenwart eines zweiwertigen Metallkations zu einem erfindungsgemässen Metallkomplex der Formeln XIII oder XIV umgesetzt wird:

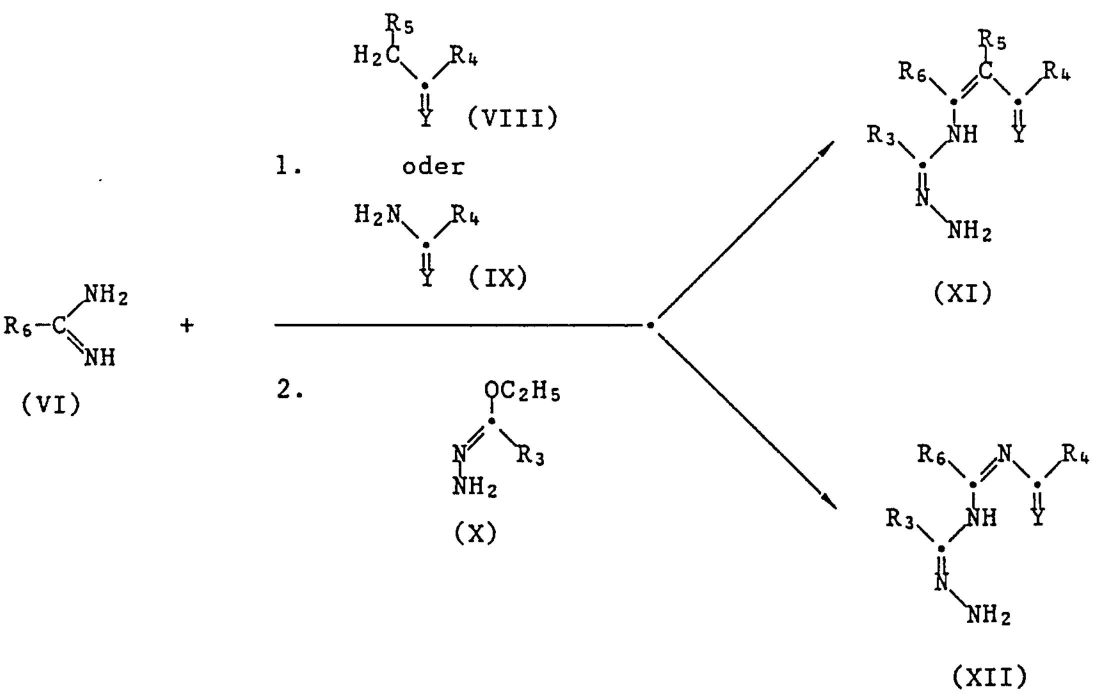

(VIII)

1. oder

(IX)

(VI) +

2.

(X)

(XI)

(XII)

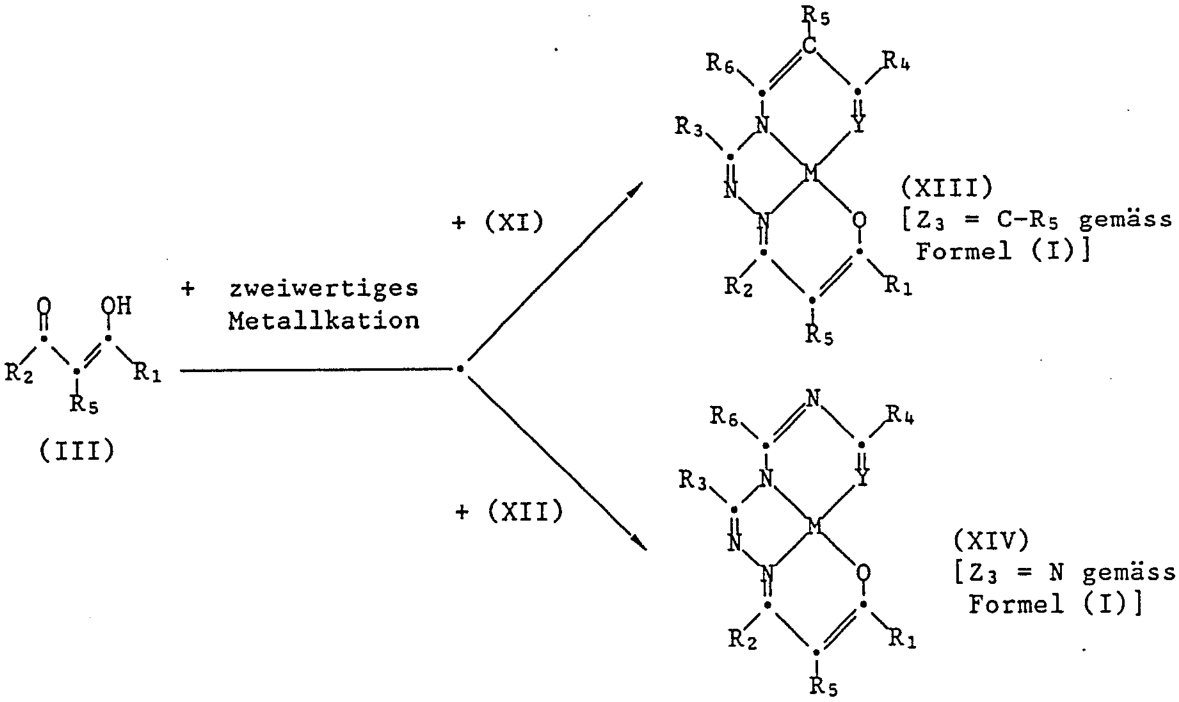


(III)

(XIII) [$Z_3$ = C-$R_5$ gemäss Formel (I)]

(XIV) [$Z_3$ = N gemäss Formel (I)]

Ein Alternativverfahren zu b) besteht darin, dass im obigen Reaktionsschema anstelle einer Verbindung der Formel X ein Orthocarbonsäuretrialkylester der Formel $R_3$-C(OAlkyl)$_3$ verwendet wird, und man das so erhaltene Zwischenprodukt nachstehender Formeln XV oder XVI

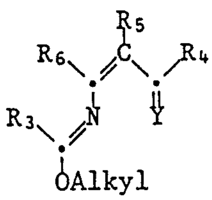

(XV)

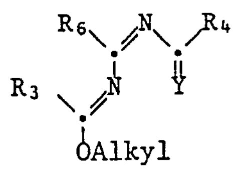

(XVI)

mit einem Hydrazon der Formel IV in Gegenwart eines zweiwertigen Metallkations zu einem erfindungsgemässen Metallkomplex der Formel I umsetzt.

c) Die erfindungsgemässen Metallkomplexe können auch gewonnen werden, indem man eine Verbindung der Formel XVII oder XVIII, die ihrerseits z.B. durch Umsetzung einer Verbindung der Formel

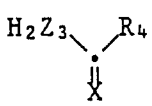

mit einem Amidin der Formel VI oder einem Nitril der Formel $R_6$-CN herstellbar ist, z.B. mit einer Verbindung der Formel V in Gegenwart eines zweiwertigen Metallkations reagieren lässt:

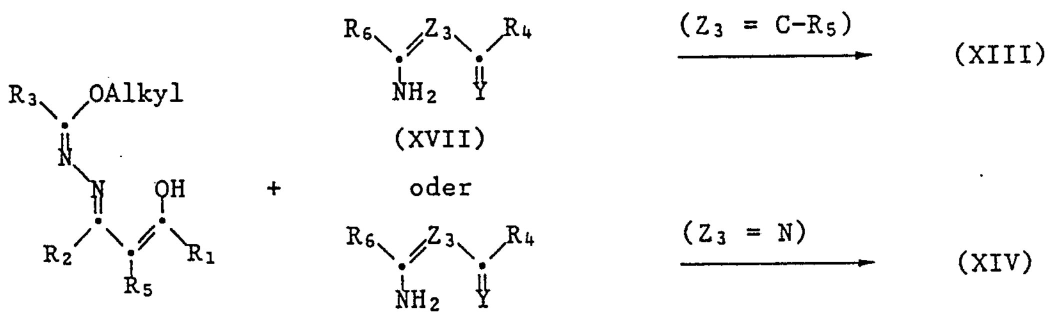


(V)

(XVII)

oder

(XVIII)

(XIII)

(XIV)

d) Ein weiteres Herstellungsverfahren geht z.B. von einer Verbindung der Formel XIX aus, welche zuerst mit einer Verbindung der Formel III zu einer Verbindung der Formel XX umgesetzt wird. Die Verbindung der Formel XX, die auch durch Umsetzung einer Verbindung der Formel IV mit einem Amidin der Formel $R_3$-C(=NH)$NH_2$ oder einem Nitril der Formel $R_3$-CN herstellbar ist, reagiert anschliessend mit einem Amidin der Formel VI oder mit einem Orthocarbonsäureester der Formel $R_6$-C(OAlkyl)$_3$ in Gegenwart eines zweiwertigen Metallkations zu einem Metallkomplex-Zwischenprodukt der Formeln XXI und XXII:

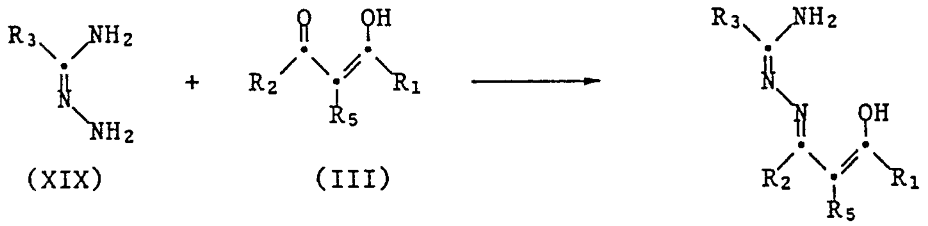

(XIX) (III) (XX)

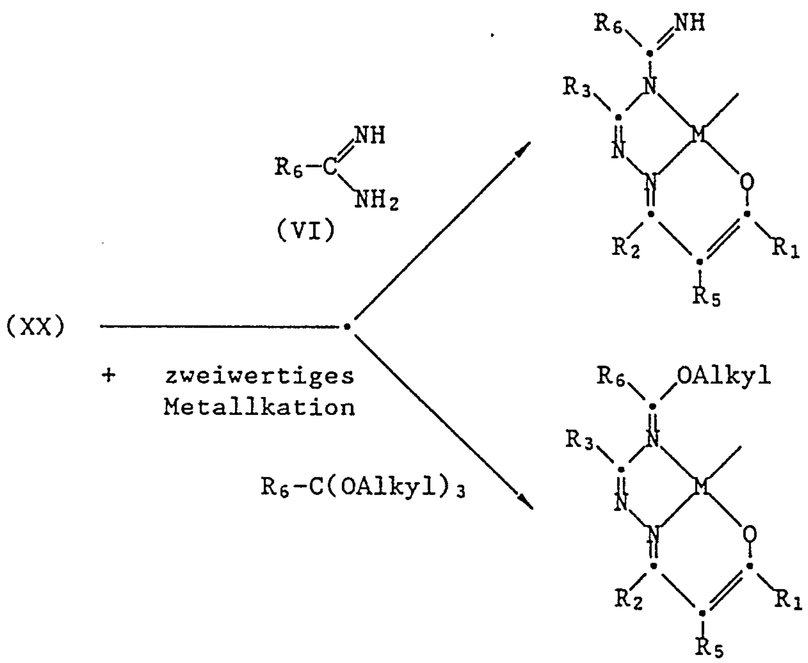


(XXI)

(XXII)

Diese Zwischenprodukte können dann z.B. mit einer Verbindung der Formeln VIII oder IX zu einem erfindungsgemässen Metallkomplex der Formel I umgesetzt werden.

Alkyl in der Formel $R_6$-C(OAlkyl)$_3$ bedeutet z.B. $C_1$-$C_5$-Alkyl, insbesondere aber Aethyl.

Eine Variante des Verfahrens d) besteht darin, dass eine Verbindung der Formel XIX zuerst mit einem Orthocarbonsäureester der Formel $R_2$-C(OAlkyl)$_3$ umgesetzt wird, und das erhaltene Produkt der Formel XXIII

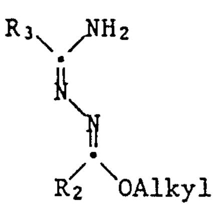

(XXIII)

dann z.B. zuerst mit einer Verbindung der Formeln VIII oder IX und anschliessend mit einer Verbindung der Formel III in Gegenwart eines zweiwertigen Metallkations zu einem erfindungsgemässen Metallkomplex der folgenden Formeln XXIV und XXV

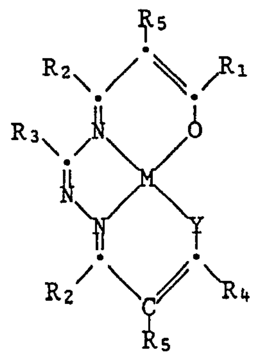

(XXIV)

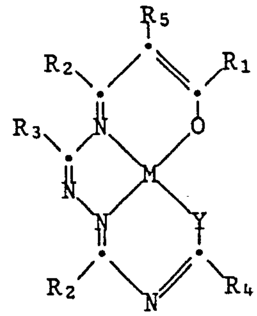

(XXV)

umgesetzt wird.

Arbeitet man analog dem obigen Alternativ-Verfahren d) mit einer Verbindung z.B. der Formel

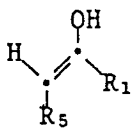

anstelle der Formeln VIII oder IX und mit einer Verbindung der Formel

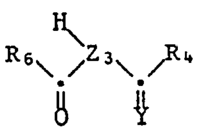

anstelle der Formel III, so erhält man einen erfindungsgemässen Metallkomplex der Formel I.

Als weitere Verfahrensvariante seien noch nachstehend einige Beispiele schematisch dargestellt:

e) (V) + $H_2NNH_2$

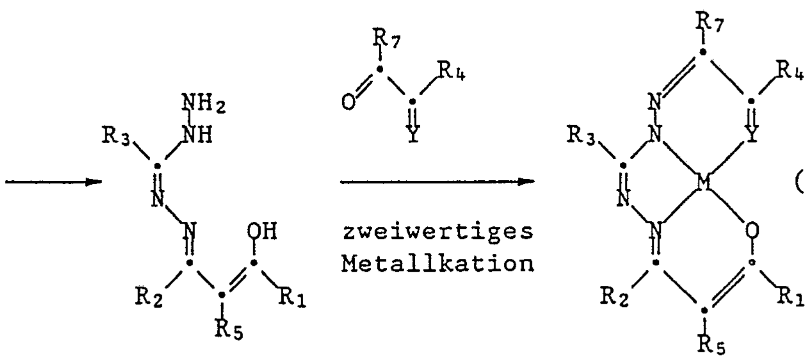


(I')

f)

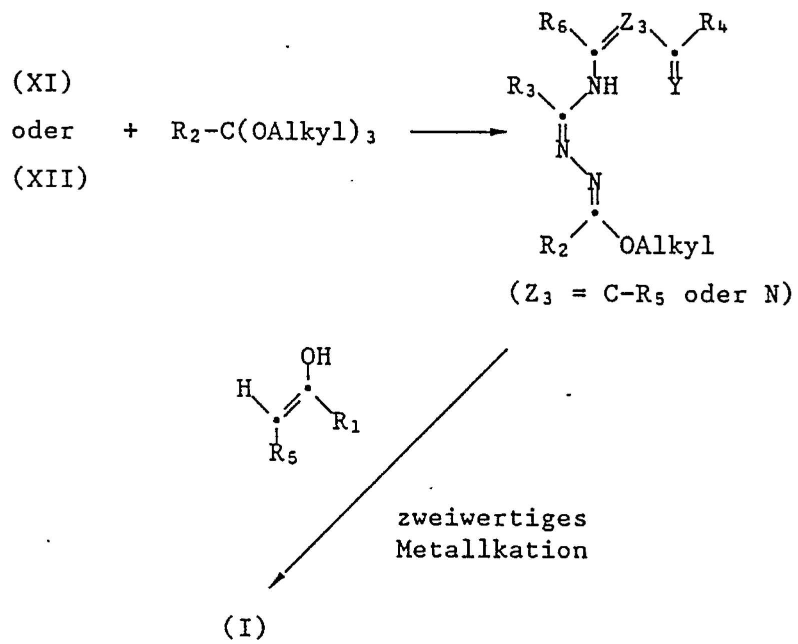
(XI)
oder
(XII)
+ $R_2$-C(OAlkyl)$_3$
($Z_3$ = C-$R_5$ oder N)
zweiwertiges
Metallkation
(I)

g)

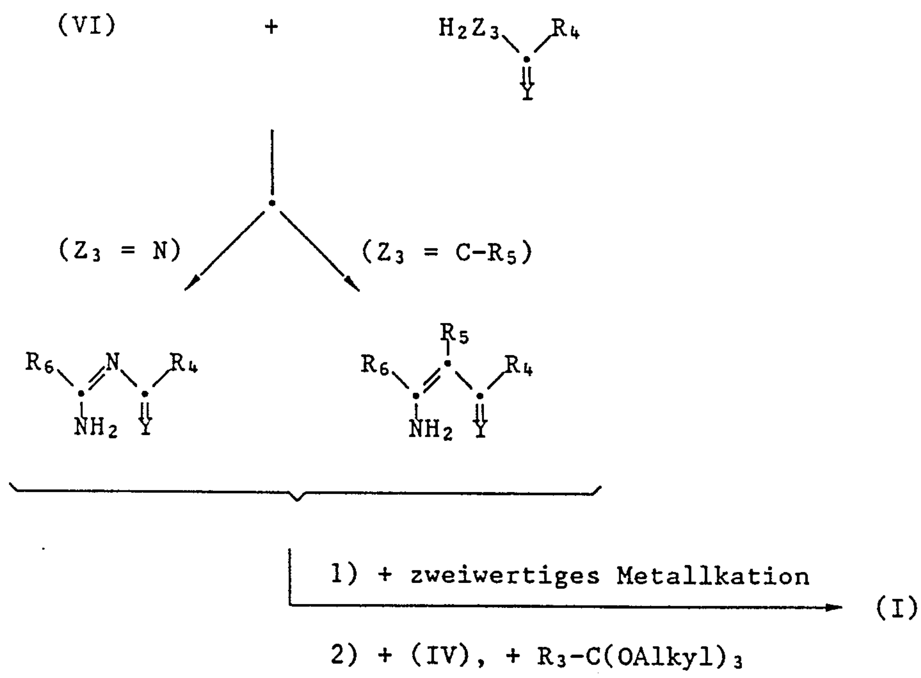
(VI)
+
($Z_3$ = N)
($Z_3$ = C-$R_5$)
1) + zweiwertiges Metallkation
(I)
2) + (IV), + $R_3$-C(OAlkyl)$_3$

h)

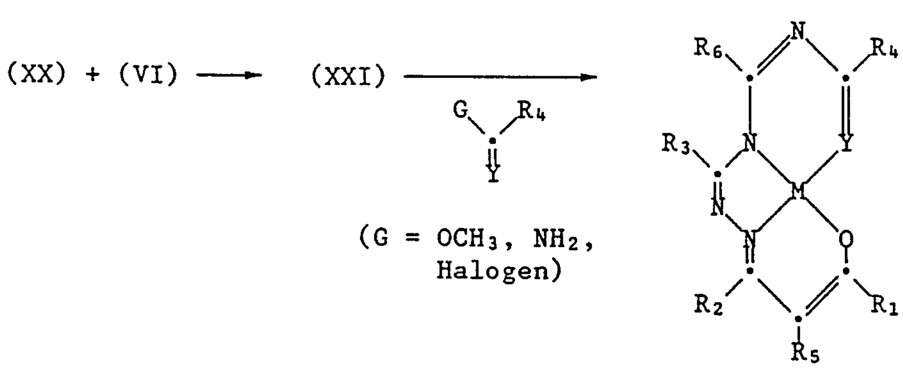
(XX) + (VI)
(XXI)
(G = $OCH_3$, $NH_2$,
Halogen)

z.B. bei 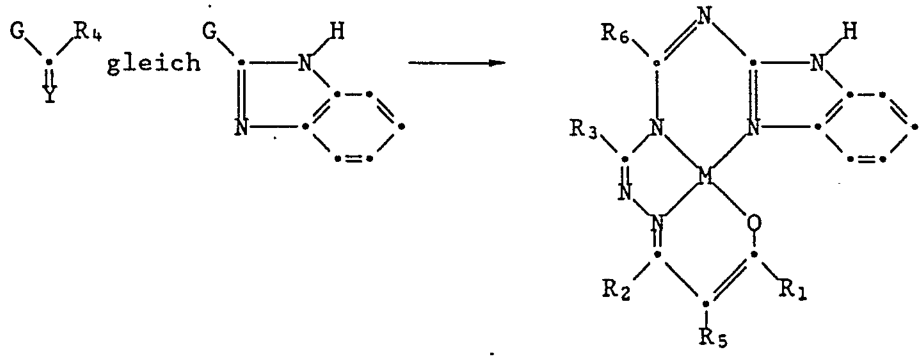


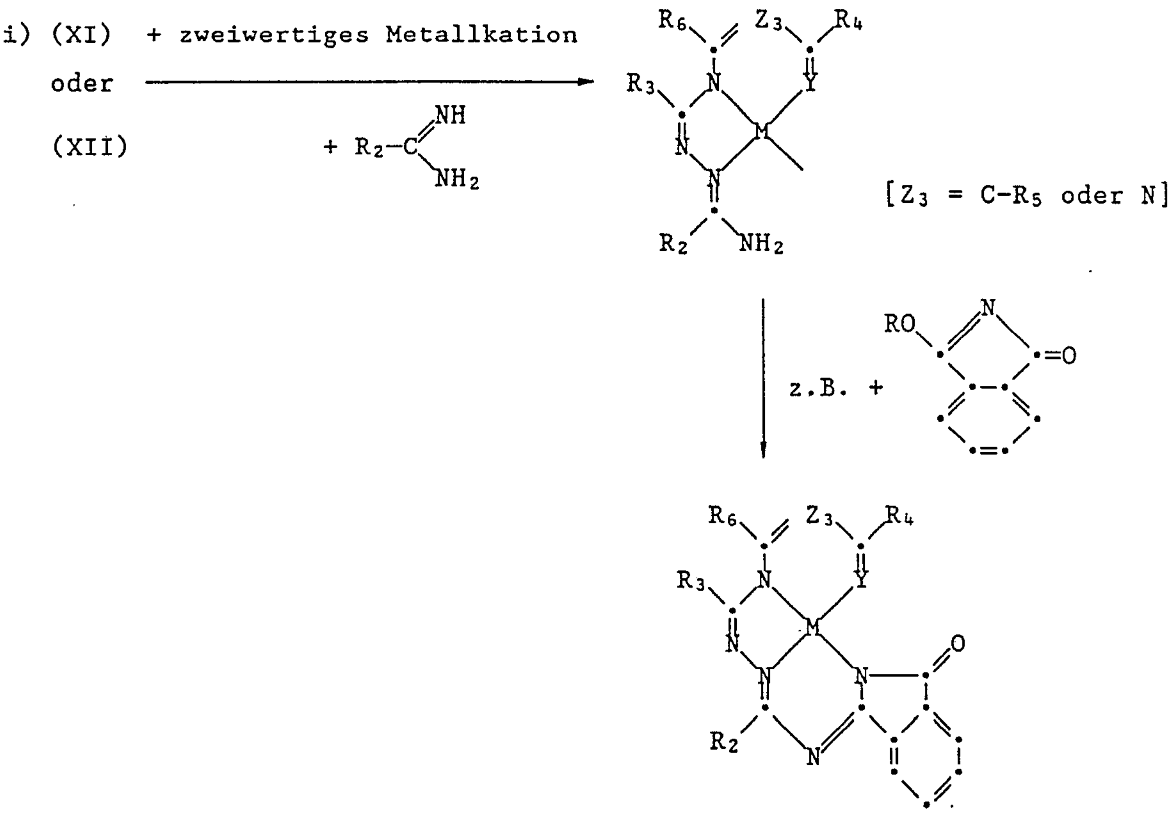


In den oben aufgeführten Formeln gemäss Verfahren b) bis i) haben $Z_3$, $R_1$ bis $R_7$, Y und M die oben angegebene Bedeutung. Nach der Verfahrensvariante d) bedeutet $R_3$ in der Formel XIX insbesondere -H (= Formamidrazon), $-NH_2$ (= Aminoguanidin) oder -OH (= Semicarbazid).

Die oben aufgeführten Verfahren stellen Analogie-Verfahren dar, die dem Fachmann bekannt sind. Sie werden zweckmässig in einem inerten organischen Lösungsmittel bei normaler, bevorzugt aber erhöhter Temperatur, gegebenenfalls in Gegenwart eines zweiwertigen Metallkations im Sinne einer Template-Reaktion, durchgeführt.

Ein erfindungsgemäss bevorzugtes Verfahren ist obiges Verfahren a).

Die benötigten Ausgangsprodukte der Formel III sind bekannt und können nach bekannten Verfahren erhalten werden. Sie leiten sich zweckmässig aus einer methylenaktiven Verbindung der Formel XXVI

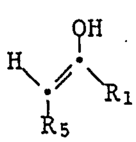

(XXVI)

ab, worin $R_1$ und $R_5$ die oben angegebene Bedeutung haben.

Beispiele für derartige Verbindung sind Hydroxybenzole oder Hydroxynaphthaline, 5- oder 6-gliedrige aromatische heterocyclische Verbindungen, die ein O-, S- oder insbesondere ein N-Atom aufweisen und gegebenenfalls noch ein weiteres N-Atom im Ring und gegebenenfalls einen ankondensierten Benzolring oder einen weiteren stickstoffhaltigen 5- oder 6-Heteroring enthalten.

Als Hydroxybenzole und -naphthaline seien solche der Formel

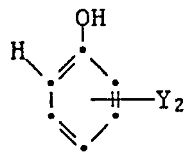 , 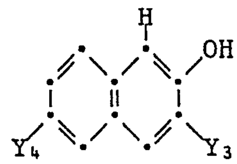

genannt,
worin $Y_2$ -H, -Cl, -Br, $-CH_3$, $-OCH_3$ oder -CN, $Y_3$ -H, -COOH, $-CONH_2$, -COO-$C_1$-$C_5$-Alkyl, -CONH-$C_1$-$C_5$-Alkyl, oder eine unsubstituierte oder durch Halogenatome, $C_1$-$C_5$-Alkyl- oder $C_1$-$C_5$-Alkoxygruppen substituierte Phenylcarbamoylgruppe, und $Y_4$ ein H- oder Halogenatom, eine Methoxy-, Nitro- oder Cyangruppe bedeuten. Halogen bedeutet z.B. Brom, Jod und insbesondere Chlor.

Beispiele für einen o-Hydroxybenzolrest enthaltende Verbindungen gemäss obiger Formel sind: Salicylaldehyd, 4- oder 5-Chlor-2-hydroxybenzaldehyd und 4-Methyl-2-hydroxybenzaldehyd.

Beispiele für o-Hydroxynaphthaline gemäss obiger Formel sind:
2-Naphthol, 6-Brom-2-naphthol, 6-Nitro-2-naphthol, 2-Hydroxy-3-naphthoesäure, 2-Hydroxy-3-naphthoesäureanilid und 2-Hydroxy-6-brom-3-naphthoesäureanilid.

Als 5- oder 6-gliedrige aromatische heterocyclische Ringe gemäss obiger Formel XXVI seien solche der Formel

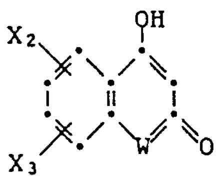

genannt,
worin $X_2$ und $X_3$ -H, -Cl oder -Br, $-CH_3$ oder $-OCH_3$, und W O, S oder NH bedeuten,
ferner solche der Formeln

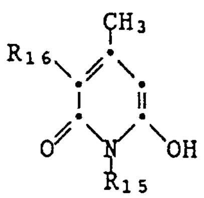 oder 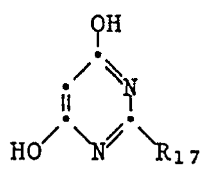 oder 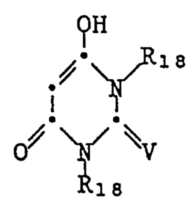 ,

worin $R_{15}$ -H oder -$C_1$-$C_5$-Alkyl, $R_{16}$ -CN, -CONH-$C_1$-$C_5$-Alkyl oder $-CONH_2$, $R_{17}$ -H, -$C_1$-$C_5$-Alkyl oder eine Phenylgruppe bedeuten, V für O oder S steht, und $R_{18}$ unabhängig voneinander -H, -$C_1$-$C_5$-Alkyl oder unsubstituiertes oder durch -Cl oder $-CH_3$ substituiertes Phenyl bedeuten, oder solche der Formel

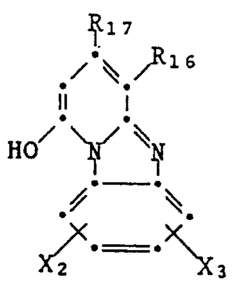 ,

worin $X_2$, $X_3$, $R_{16}$ und $R_{17}$ die oben angegebene Bedeutung haben,
oder solche der Formel

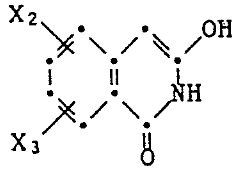 ,

worin $X_2$ und $X_3$ die oben angegebene Bedeutung haben, oder Pyrazole der Formeln

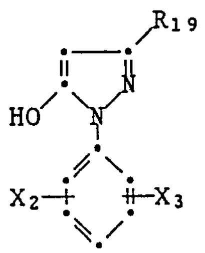 oder 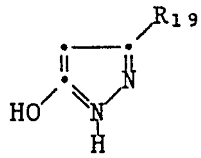 ,

worin $R_{19}$ Alkyl mit 1-5 C, Alkoxycarbonyl mit 2-6 C oder Carbamoyl, und $X_2$ und $X_3$ die oben angegebene Bedeutung haben,
oder solche der Formeln $R_{20}$-$CH_2$-$R_{21}$ oder NC-$CH_2R_{20}$, worin $R_{20}$ und $R_{21}$ unabhängig voneinander für eine Alkoxycarbonyl- oder Alkyl- oder Arylcarbamoylgruppe, Alkyl mit 2-6 C-Atomen, eine Acetyl-, Benzoyl-, Carbamoyl- oder Benzylcarbamoyl-gruppe, oder Phenylthiocarbamoyl, oder für einen Rest der Formel

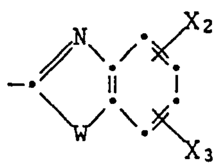

stehen, worin
W O, S oder NH bedeutet, und $X_2$ und $X_3$ die oben angegebene Bedeutung haben, ferner $R_{20}$ und $R_{21}$ insbesondere für eine Gruppe der Formel

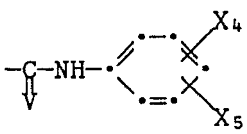

steht, worin V O oder S ist, $X_4$ -H, -Cl, -Br, -$NO_2$, -$CF_3$, -$CONH_2$, -$SO_2NH_2$, -$C_1$-$C_5$-Alkyl, -$C_1$-$C_5$-Alkoxy, -$SO_2NHC_1$-$C_5$-Alkyl, -COO-$C_1$-$C_5$-Alkyl, -CONH-$C_1$-$C_5$-Alkyl, -$NHCOC_1$-$C_5$-Alkyl eine unsubstituierte oder durch -Cl, -Br oder -$CH_3$ substituierte Phenoxy-, Benzoylamino-, Phenylcarbamoyl- oder Phenylazogruppe, und $X_5$ -H, -Cl, -Br, -$C_1$-$C_5$-Alkyl oder -$C_1$-$C_5$-Alkoxy bedeuten. V steht bevorzugt für O.

Als Beispiele für aromatische heterocyclische Verbindungen der Formel XXVII seien genannt:
2,6-Dihydroxy-4-methyl-5-cyan-pyridin
2,6-Dihydroxy-4-methyl-5-carbamoyl-pyridin
2,4-Dihydroxychinolin
2,4-Dihydroxy-5-, -6-, -7- oder -8-chlor-chinolin
2,4-Dihydroxy-6,8- oder -7,8-dichlor-chinolin
2,4-Dihydroxy-6-, -7- oder -8-methyl-chinolin
2,4-Dihydroxy-6-chlor-8-methyl-chinolin
Barbitursäure, Thiobarbitursäure
2-Methyl-4,6-dihydroxy-pyrimidin
4-Hydroxy-cumarin
4-Hydroxy-6-methyl-cumarin
4-Hydroxy-6-methoxy-cumarin
1-Phenyl-3-methyl-pyrazolon-5
1-Phenyl-3-carboxy-pyrazolon-5
1-Phenyl-3-methoxycarbonyl-pyrazolon-5
1-Phenyl-3-äthoxycarbonyl-pyrazolon-5
1-o-Chlorphenyl-3-methyl-pyrazolon-5
1-p-Chlorphenyl-3-methyl-pyrazolon-5
1-o-Methylphenyl-3-methyl-pyrazolon-5
1-p-Methylphenyl-3-methyl-pyrazolon-5.

Als Beispiele für Verbindungen der Formel $NCCH_2$-$R_{20}$ seien die entsprechenden Acetonitrile, die in der GB-PS 1 467 595, Seite 7, aufgeführt sind, erwähnt, ferner Cyanessigsäure-o-chlorphenyl-, -p-chlorphenyl-, -m-methylphenyl-, -p-methylphenyl-, -3,4-dichlorphenyl-, -3,5-dimethylphenyl-, -3,4-dimethylphenyl-, -3-chlor-4-methylphenyl-, -o-methoxyphenyl-, -2,4-dimethoxyphenyl-, -2,5-dimethoxyphenyl-, -p-acetylaminophenyl-, -p-benzoylaminophenyl-, -3-chlor-4-p-chlorbenzoylaminophenyl-, -4-carbamoylphenyl-, -4-sulfamoylphenyl-, -4-phenylazophenyl-, -4-phenoxyphenyl-, -p-nitrophenyl-, -3-trifluormethylphenyl-, oder -2-chlor-5-trifluormethylphenyl-amid.

Als methylenaktive Verbindungen der Formel VIII können die gleichen Verbindungen verwendet werden, welche bereits für die Ausdeutung obiger methylenaktiver Verbindungen der Formel XXVI erwähnt worden sind.

Als Beispiele von Aminen der Formel IX seien heterocyclische Amine genannt, vorzugsweise aber solche, in denen sich die Aminogruppe direkt an einem 5- oder 6-gliedrigen Heteroring befindet, der 1 bis 2 N-Atome und ausserdem noch ein O- oder S-Atom enthalten kann. Am heterocyclischen Stammkern kann ein gegebenenfalls substituierter Benzolkern ankondensiert sein. Beispiele hierfür sind die in der GB-PS 1 467 595 (S. 6-7) aufgeführten Amine, ausserdem 2-Aminopyridin, 2-Amino-5-chlorpyridin, Diaminophthalazin, 2-Amino-4-hydroxychinolin, 2,6-Diaminopyridin, 2-Amino-4,5-dimethylthiazol, 6-Amino-2,4-dihydroxypyrimidin-1,3 und 4-Amino-3-methyl-1-N-phenyl-pyrazolon-5, sowie insbesondere Aminoderivate der Formel

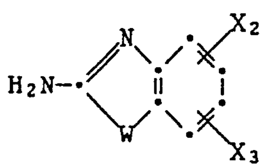

,

worin W O, S oder NH ist, und $X_2$ und $X_3$ die oben angegebene Bedeutung haben.

Bevorzugte Metallkomplexe leiten sich aus dem Liganden der Formel XXVII

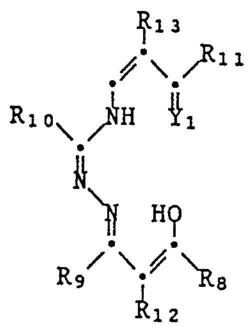

(XXVII) ab, worin

$R_8$, $R_9$, $R_{10}$, $R_{11}$, $R_{12}$ und $R_{13}$ sowie $Y_1$ die oben angegebene Bedeutung haben und das Metall ein Nickelkation ist.

Ganz bevorzugte Metallkomplexe leiten sich aus dem Liganden der Formel XXVIII

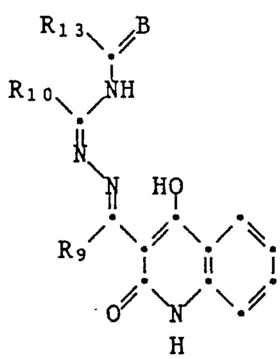

(XXVIII)

ab, worin

$R_9$, $R_{10}$ und $R_{13}$ unabhängig voneinander -H, Phenyl oder $-CH_3$ sind, das Metall ein zweiwertiges Ni-Kation darstellt, und B für einen Rest der Formeln

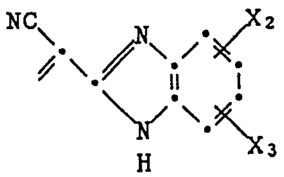 , 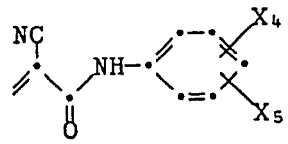 , 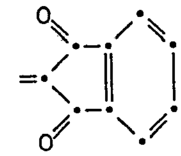 ,

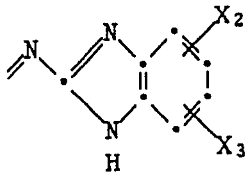 , 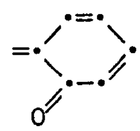 , 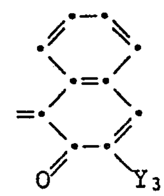 ,

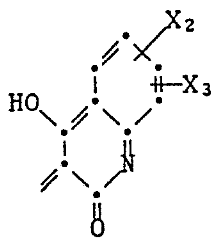 , 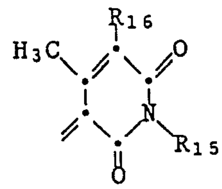 , 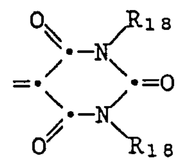 ,

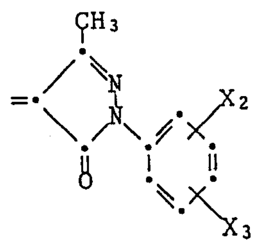 , 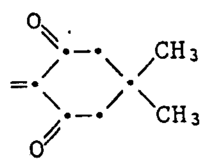 oder 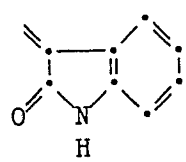

steht, wobei

$X_2$, $X_3$, $X_4$, $X_5$, $Y_3$, $R_{15}$, $R_{16}$ und $R_{18}$ die oben angegebene Bedeutung haben. Ganz bevorzugt sind Liganden der Formel XXVIII, worin $R_9$, $R_{10}$ und $R_{13}$ -H, und B einen Rest der oben angegebenen Strukturen bedeuten, wobei $X_2$ und $X_3$ -H, -Cl oder $-CH_3$, $X_4$ -H, -Cl, $-CF_3$, $-CONH_2$, $-CH_3$, $-OCH_3$, $-NHCOCH_3$, $-COOCH_3$, $-COOC_2H_5$ oder $-NHCOC_6H_5$, $X_5$ -H, -Cl, $-CH_3$ oder $-OCH_3$, $Y_3$ -H, unsubstituiertes oder durch -Cl, und/oder $-CH_3$ und/oder $-OCH_3$ substituiertes Phenylcarbamoyl, $R_{15}$ -H, $-CH_3$ oder $-C_2H_5$, $R_{16}$ -CN, und $R_{18}$ -H oder $-CH_3$ bedeuten.

Ebenfalls ganz bevorzugt sind Metallkomplexe aus einem Liganden der Formel XXVIII, wobei $R_9$, $R_{10}$ und $R_{13}$ unabhängig voneinander -H, $-CH_3$ oder Phenyl sind, und B für einen Rest der Formeln

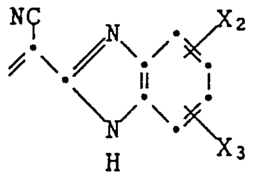 , 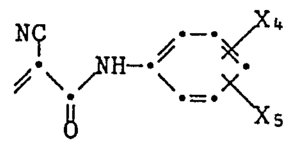 ,

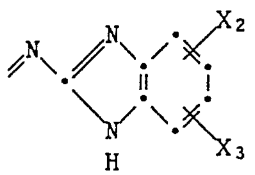 , 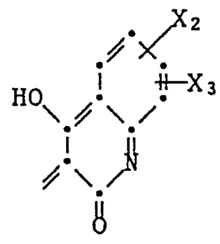 , 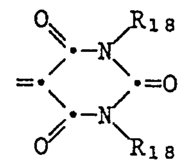 und

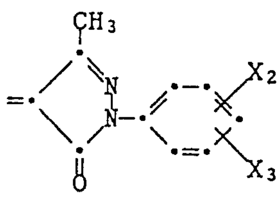

steht, worin
$X_2$, $X_3$, $X_4$, $X_5$ und $R_{18}$ die oben angegebenen Bedeutungen haben.

Als zweiwertige Metallkationen abgebendes Mittel für die oben erwähnten Verfahren verwendet man vorzugsweise Salze des Zinks, Mangans, Kobalts, Eisens, insbesondere aber des Kupfers und des Nickels bzw. Mischungen solcher Metalle. Man verwendet zweckmässig die Formiate, Acetate oder Stearate dieser Metalle.

Die Umsetzung der Hydrazone mit den Orthocarbonsäureestern erfolgt zweckmässig in einem Ueberschuss des letzteren; die übrigen Umsetzungen erfolgen z.B. in einem polaren Lösungsmittel, insbesondere einem solchen hydrophiler Natur, beispielsweise einem Amid, wie Dimethylformamid, Formamid, Dimethylacetamid oder N-Methylpyrrolidon, ferner Dimethylsulfoxid, Acetonitril oder in einem Alkohol, wie beispielsweise Aethylcellosolve. Es kann auch ein Gemisch polarer Lösungsmittel verwendet werden.

Die Umsetzungstemperaturen liegen zweckmässig zwischen 100-200°C.

Die Isolierungen des erhaltenen Metallkomplexes erfolgt wie üblich z.B. durch Filtration. Das Nutschgut wird mit Lösungsmittel gut gewaschen. Es wird im allgemeinen in guter Ausbeute und Reinheit erhalten und kann ohne weitere Reinigung in feinverteilter Form zum Färben von hochmolekularem organischem Material verwendet werden.

Sofern ihre Reinheit und/oder partikel-Form und -Grösse noch nicht genügend bzw. optimal sind, können die erfindungsgemässen Metallkomplexe weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung oder durch Salzknetung oder durch eine nachträgliche thermische Lösungsmittelbehandlung.

Je nach Konditionsverfahren und/oder Applikationszweck kann es von Vorteil sein, dem erfindungsgemässen Metallkomplex gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol, oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Hochmolekulare organische Materialien, die mit den erfindungsgemässen Metallkomplexen gefärbt bzw. pigmentiert werden können, sind z.B. Celluloseäther und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen insbesondere in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Metallkomplexe als Toner oder in Form von Präparaten einzusetzen. Bezogen auf das zu pigmentierende hochmolekulare organische Material kann man die Metallkomplexe beispielsweise in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Metallkomplexen erfolgt beispielsweise derart, dass man einen solchen Metallkomplex gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Metallkomplexe in die Polymeren eingearbeitet werden. Es ist ferner möglich, zwecks Erzielung verschiedener Farbtöne den hochmolekularen, organischen Stoffen neben den Metallkomplexen gemäss Formel I noch Füllstoffe bzw. andere farbgebende Bestandteile, wie Weiss-, Bunt-oder Schwarzpigmente, in beliebigen Mengen zuzufügen.

Zum Pigmentieren von Lacken und Druckfarben werden die hochmolekularen organischen Materialien und die Metallkomplexe gemäss Formel I gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Werden gewisse erfindungsgemässe Pigment in Kunststoffe eingearbeitet, so stabilisieren sie diese gegen die Einflüsse von Licht und Wetter. Aus den gefärbten Kunststoffen hergestellte Gegenstände zeichnen sich durch eine längere Gebrauchsdauer aus.

Dank ihrer hervorragenden Hitzebeständigkeit und guten Dispergierbarkeit eignen sich die anmeldungsgemässen Komplexe, bevorzugt die Nickelkomplexe, insbesondere zum Färben von modernen Engineering Plastics.

Die erhaltenen Färbungen, beispielsweise in Kunststoffen, Fasern, Lacken oder Drucken, zeichnen sich durch gute allgemeine Eigenschaften, wie gute Verteilung, hohe Transparenz bzw. Deckkraft bei optimaler Partikelgrösse und -form, hohe Reinheit, einen guten Glanz, gute Ueberlackier-, Migrations-, Hitze-, Licht- und Wetterbeständigkeit, aus.

Beispiel 1:

1a) Zu einer Lösung von 170 ml Triäthylorthoformiat mit 0,2 ml konzentrierter $H_2SO_4$ werden innerhalb einer Stunde bei 135-140°C portionenweise 43,5 g 3-Acetyl-2,4-dihydroxychinolin-Hydrazon unter Rühren zugegeben. Die entstandene Suspension wird noch während einer Stunde bei 110-120°C gehalten und bei 80°C filtriert, und der Rückstand wird mit Aethanol gewaschen und dann getrocknet.
Ausbeute: 52 g (= 95 % d. Th.) eines Produktes der Formel

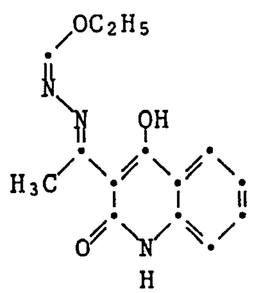

1b) 16,4 g dieses Zwischenproduktes werden mit 12,5 g Formamidinacetat und 17,9 g Nickelacetat in 500 ml Dimethylformamid (DMF) auf 130°C erhitzt. Nach 30 Minuten werden 18,8 g N,N'-Dimethylbarbitursäure zugegeben. Der entstehende Alkohol wird abdestilliert, und die erhaltene Suspension wird während 2 Stunden am Rückfluss gerührt. Der heiss abfiltrierte Niederschlag wird mit kaltem DMF und danach mit Wasser gewaschen und getrocknet.
Ausbeute: 21 g (= 74 % d. Th.) eines Produktes mit folgender Elementaranalyse

| | C | H | N | Ni (in %) |
|---|---|---|---|---|
| Ber. für $C_{19}H_{16}N_6O_5Ni$ | 48,9 | 3,5 | 18,0 | 12,6 |
| Gefunden | 46,2 | 4,0 | 17,6 | 12,9 |

und folgender Struktur (oder einer tautomeren Form davon)

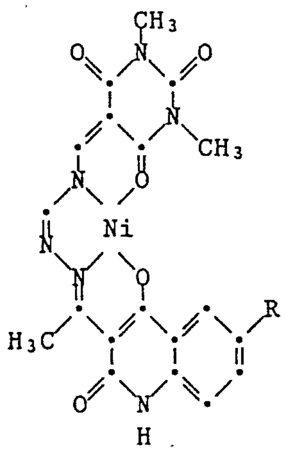

wobei R -H bedeutet.

Beispiele 1c/1d:

Anstelle von 3-Acetyl-2,4-dihydroxychinolin-Hydrazon kann bei sonst gleichen Bedingungen wie im Beispiel 1 beschrieben auch eine entsprechende Menge 3-Acetyl-6-chlor-2,4-dihydroxychinolin-Hydrazon oder 3-Acetyl-6-methyl-2,4-dihydroxychinolin-Hydrazon eingesetzt werden, wobei die erhaltenen Metallkomplexe die obige Struktur, worin R -Cl (=Bspl. 1c) bzw. $-CH_3$ (=Bspl. 1d) bedeutet, aufweisen.

Beispiele 2 bis 8:

Anstelle der N,N'-Dimethylbarbitursäure können bei sonst gleichen Bedingungen wie im Beispiel 1 beschrieben auch die in der folgenden Tabelle aufgeführten methylenaktiven Verbindungen der Formel

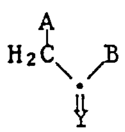

eingesetzt werden, wobei die erhaltenen Metallkomplexe folgende Struktur (oder eine tautomere Form davon) aufweisen:

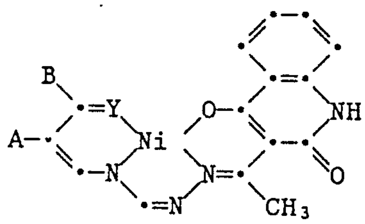

| Bsp. Nr. | methylenaktive Verbindung der Formel 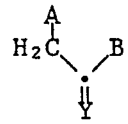 | Nuance der erhaltenen Verbindung in Weich-PVC-Folien (0,1 % Pigmentkonz.) |
|---|---|---|
| 2 | 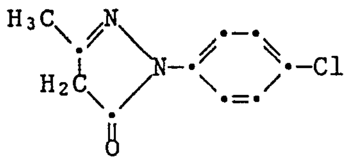 | gelb |
| 3 | 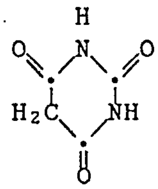 | gelb |
| 4 | 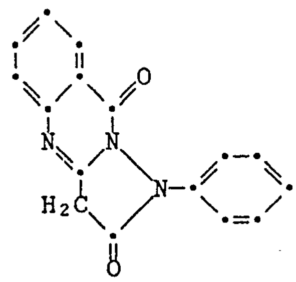 | gelb |
| 5 | 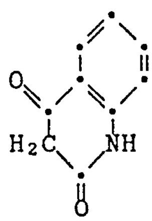 | rotst. gelb |
| 6 | 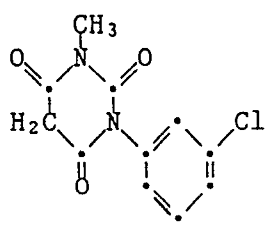 | gelb |
| 7 | 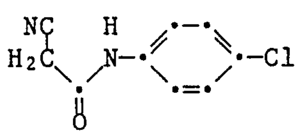 | gelb |
| 8 | 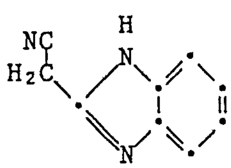 | gelb |

Beispiel 9:

13,5 g des Zwischenproduktes aus obigem Beispiel 1a) werden mit 6,5 g Benzamidin in 500 ml DMF auf 120° C erwärmt. Zur gelben Lösung werden 13 g Nickelacetat zugegeben, und das Gemisch wird während zwei Stunden bei 130-140° C gerührt. Bei 70° C wird die Suspension filtriert, und der Niederschlag wird mit kaltem DMF und dann mit Wasser gewaschen und getrocknet.

Ausbeute: 11 g (= 56 % d. Th.) eines Produktes mit folgender Elementaranalyse

| | C | H | N | Ni (in %) |
|---|---|---|---|---|
| Ber. für $C_{19}H_{15}N_5O_2Ni$ | 56,5 | 3,7 | 17,3 | 14,5 |
| Gefunden | 56,6 | 3,7 | 16,3 | 14,4 |

und folgender Struktur (oder einer tautomeren Form davon):

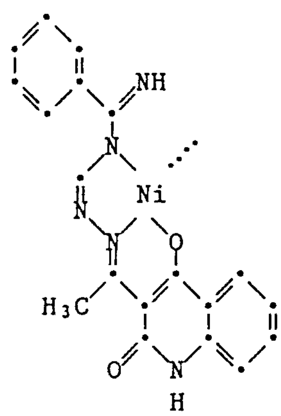

Beispiel 10:

10 g des gemäss obigem Beispiel 9 erhaltenen Produktes werden mit 3,5 g Barbitursäure in 250 ml DMF während 2 Stunden bei 130-135° C gerührt, und die erhaltene Suspension wird bei 80° C filtriert, mit kaltem DMF und dann mit Wasser gewaschen und getrocknet.

Das erhaltene Produkt weist die folgende Formel (oder eine tautomere Form davon) auf:

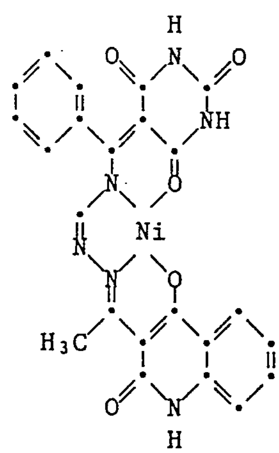

Beispiel 11:

1,6 g des gemäss obigem Beispiel 1a) erhaltenen Zwischenproduktes werden mit 0,7 g Formamidinacetat und 1,6 g Ni-Acetat in 30 ml DMF auf 100° C erwärmt. Zur Suspension werden 1,1 g des Produktes der Formel

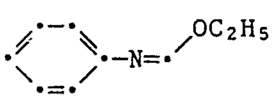

gegeben, die erhaltene Suspension wird dann während einer Stunde bei 115-120°C gerührt und bei 80°C filtriert, und der Niederschlag wird mit kaltem DMF und dann mit Wasser gewaschen und getrocknet. Ausbeute: 1,2 g (= 46 % d. Th.) eines Produktes folgender Struktur (oder einer tautomeren Form davon)

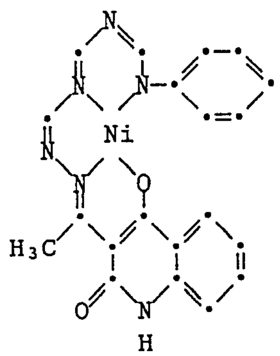

Beispiel 12:

5,5 g des Zwischenproduktes aus Beispiel 1a werden zusammen mit 4,2 g Formamidinacetat und 6,0 g Nickelacetat in 70 ml N-Methylpyrrolidon suspendiert, und das erhaltene Gemisch wird auf 130°C erhitzt. Dann werden 5 g 2-Aminobenzimidazol portionenweise zugegeben, das Gemisch wird während 5 Stunden bei dieser Temperatur gerührt und anschliessend heiss filtriert. Der Niederschlag wird mit N-Methylpyrrolidon und dann mit Wasser gewaschen und getrocknet. Man erhält 4,9 g eines Produktes mit folgender Elementaranalyse

| | C | H | N | Ni (in %) |
|---|---|---|---|---|
| Ber. für $C_{20}H_{15}N_7O_2Ni$ | 54,09 | 3,40 | 22,08 | 13,22 |
| Gefunden | 52,83 | 3,55 | 22,12 | 13,50 |

und folgender Struktur (oder einer tautomeren Form davon):

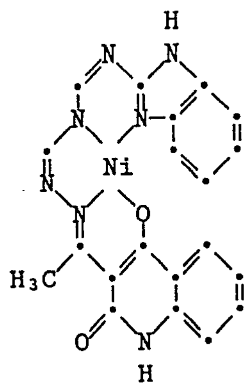

Beispiel 13:

a) Zu einer Lösung von 0,5 ml konzentrierter $H_2SO_4$ in 410 ml Triäthylorthoformiat werden 75 g 2-Hydroxyacetophenon-Hydrazon gegeben und zusammen auf 130°C erhitzt. Das entstehende Ethanol wird abdestilliert. Nach 5 Stunden wird das Volumen der Mischung unter vermindertem Druck auf einen Drittel reduziert und auf 0°C abgekühlt. Der Niederschlag wird abfiltriert, mit Ethanol gewaschen und getrocknet. Ausbeute: 77 g (=75 % der Theorie).

b) 10,3 g dieses Zwischenproduktes werden mit 10,4 g Formamidinacetat und 13 g Nickelacetat in 250 ml N-Methylpyrrolidon (=NMP) auf 160°C erhitzt, dann werden zum erhaltenen Gemisch 11,5 g 4′-Chlorphenyl-3-methyl-pyrazolon-5 zugegeben. Man rührt das Gemisch während 3 Stunden bei dieser Temperatur. Nach dem Abkühlen auf 0°C wird die Suspension filtriert, und der Rückstand wird mit kaltem NMP und anschliessend Ethanol gewaschen und getrocknet

Ausbeute: 14 g eines Produktes mit folgender Elementaranalyse (in %)

| | C | H | N | Cl | Ni |
|---|---|---|---|---|---|
| Ber. für $C_{20}H_{16}N_5O_2Cl\,Ni$ | 53,08 | 3,56 | 15,48 | 7,83 | 12,97 |
| Gefunden | 52,96 | 3,70 | 15,41 | 7,91 | 12,7 |

und folgender Struktur (oder einer tautomeren Form):

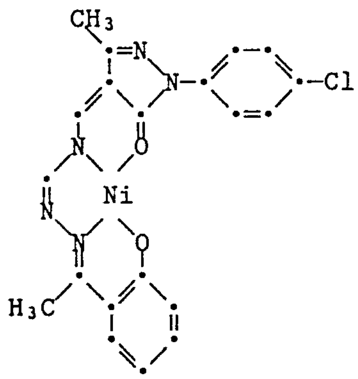

Beispiele 13 c) und 13 d):

Anstelle von 2-Hydroxyacetophenon-Hydrazon (gemäss Bspl. 13 a) können die Hydrazone des 4′-Chlor-1-phenyl-3-methyl-pyrazolon-5-aldehyds oder der Acetylbarbitursäure in entsprechenden Mengen unter denselben Bedingungen wie im Beispiel 13 a) und 13 b) eingesetzt werden, und man erhält Produkte folgender Strukturen (oder einer tautomeren Form):

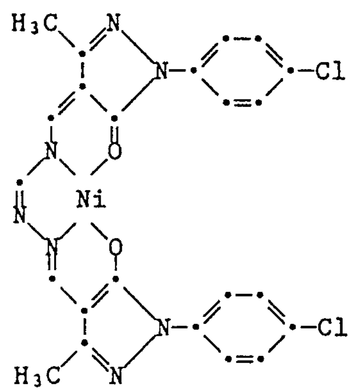

bzw.

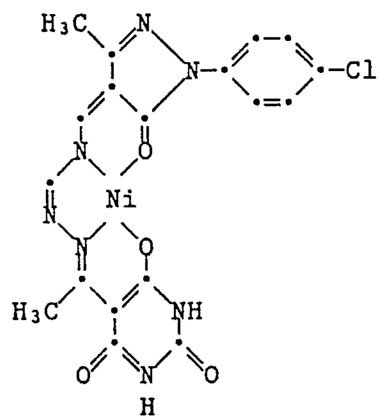

Beispiel 13 e):

Anstelle des Hydrazons des 4′-Chlorphenyl-3-methyl-pyrazolon-5-aldehyds (gemäss Bspl. 13c) kann das Hydrazon von 1-Phenyl-3-methylpyrazolon-5-aldehyd und 1-Phenyl-3-methylpyrazolon-5 anstatt das entsprechende Chlorderivat gemäss Beispiel 13 b) in entsprechenden Mengen unter denselben Bedingungen wie im Beispiel 13 a) und 13 b) eingesetzt werden, und man erhält ein Produkt folgender Struktur (oder einer tautomeren Form):

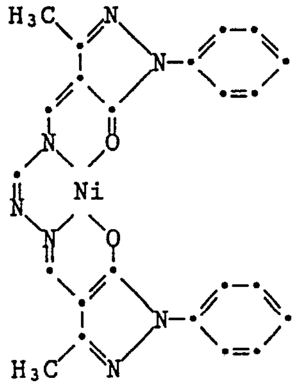

Beispiel 14:

Anstelle von 2-Hydroxyacetophenon-Hydrazon (gemäss Bspl. 13a) kann das Hydrazon von Salicylaldehyd unter denselben Bedingungen wie in Beispiel 13 a) und 13 b) eingesetzt werden, und man erhält ein gelbes Produkt mit der Elementaranalyse

| | C | H | N | Cl | Ni |
|---|---|---|---|---|---|
| Ber. für $C_{19}H_{14}N_5O_2Cl\,Ni$ | 52,04 | 3,22 | 15,97 | 8,08 | 13,39 |
| Gefunden | 51,32 | 3,39 | 16,26 | 8,51 | 12,6 |

und der folgenden Struktur (oder einer tautomeren Form):

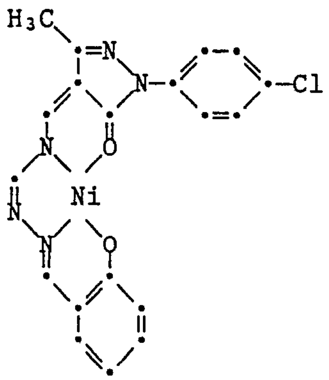

Beispiel 15:

1 g des nach Beispiel 2 hergestellten Pigmentes, 10 g Titandioxid und 1000 g des Mischpolymers ®Xenoy (Pulverqualität der Firma GENERAL ELECTRIC, Bergen NL) werden gut gemischt. Die Mischung wird zweimal bei 250° C extrudiert, dann granuliert, und die Granulate werden bei 120° C während 4 Stunden getrocknet. Das so hergestellte gefärbte Granulat wird bei 260° C, 280° C und 290° C, jeweils nach 5-minütigem Verweilen bei diesen Temperaturen, zu Plättchen verspritzt. Man erhält gelbe Ausfärbungen mit sehr guter Wetterbeständigkeit.

Beispiel 16:

5 g des gemäss Beispiel 3 erhaltenen 1:1-Nickelkomplexes werden mit 95 g eines Alkyd-Melaminharzlakkes, zusammengesetzt aus 34,2 g ®Beckosol 27-320 der Firma Hoechst, BRD, 17,1 g ®Super Beckamin 13-501 der Firma Reichhold Chemie, Wien A, 41,8 g Xylol und 1,9 g Methylglykol, während 72 Stunden in einer Kugelmühle dispergiert.

Für die Herstellung einer Volltonlackierung wird der eingefärbte Volltonlack auf eine Aluminiumfolie gespritzt, 30 Minuten bei Raumtemperatur vorgetrocknet und anschliessend während 30 Minuten bei 130° C eingebrannt. Die so hergestellte gelbe Lackierung zeigt eine sehr gute Licht-, Wetter- und Ueberlackierbeständigkeit.

Für die Herstellung einer Weissverschnittausfärbung werden 7 g der Volltondispergierung zusammen mit 33,25 g Weisslack (enthält 20 % Titandioxid RN 59 der Firma KRONOS, Leverkusen BRD), Verschnittverhältnis 5 T Buntpigment zu 95 T Weisspigment, vermischt und bei gleichen Bedingungen wie bei der Volltonlackierung appliziert. Man erhält eine gelbe, farbstarke Weissverschnittlackierung mit guter Licht- und Wetterbeständigkeit.

Beispiel 17

Ein zur Faserherstellung geeignetes Polypropylengranulat wird mit 5% eines Pigmentpräparates, enthaltend 20 % des Nickelkomplexes gemäss Beispiel 1 bzw. Beispiel 2, gründlich gemischt. Die beiden Mischungen werden separat auf einer Schmelzspinnanlage bei 260-285°C zu Fäden versponnen, die anschliessend auf einer Streckzwirnanlage im Verhältnis 1:4 verstreckt und aufgespult werden. Man erhält gelbe Färbungen, die sich durch gute Licht-, Wäsche-, Trockenreinigungs-, Abgas- und Peroxydbleichechtheiten auszeichnen.

Das oben eingesetzte Präparat wird wie folgt hergestellt:

25 g des gelben Pigmentes gemäss Beispiel 1 bzw. Beispiel 2, 37,5 g Polyäthylen AC-617 (der Firma ALLIED Chemical USA) und 125 g Natriumchlorid werden in einem Pulvermischer gründlich gemischt. Diese Mischung wird mit einer Laborknetmaschine bei 80-100°C während 6 Stunden geknetet. Danach werden 62,5 g Polypropylen Pulver vom Typ ®Daplen PT 55 (der Firma CHEMIE Linz) zur Knetmasse gegeben und der Kneter auf 30°C gekühlt. Das erhaltene Präparat wird mit Wasser vermahlen, filtriert, salzfrei gewaschen, getrocknet und pulverisiert.

**Patentansprüche**

1. In der Masse gefärbtes hochmolekulares organisches Material enthaltend mindestens einen 1:1 Metallkomplex aus einem Liganden der Formel I

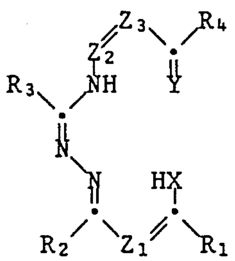

(I),

worin unabhängig voneinander $Z_1$ ein N-Atom oder die Gruppe C-$R_5$, $Z_2$ ein N-Atom oder die Gruppe C-$R_6$, und $Z_3$ bei $Z_2$ = C-$R_6$ ein N-Atom oder die Gruppe C-$R_5$ und $Z_3$ bei $Z_2$ = N die Gruppe C-$R_7$ bedeuten, wobei die Gruppen $Z_2$ und $Z_3$ nicht gleichzeitig ein N-Atom darstellen, X und Y unabhängig voneinander (wenn mit $R_1$ bzw. $R_4$ nicht cyclisch gebunden) O, S oder NH oder, wenn mit $R_1$ bzw. $R_4$ cyclisch gebunden, ein N-Atom bedeuten, ferner Y unsubstituiertes oder durch nichtwasserlöslichmachende Gruppen substituiertes Phenylamino oder Naphthylamino ist, und ferner X mit $R_1$, Y mit $R_4$, $R_1$ mit $R_5$ (bei $Z_1$ = C-$R_5$), $R_4$ mit $R_5$ bzw. $R_4$ mit $R_7$ (bei $Z_3$ = C-$R_5$ bzw. C-$R_7$) und $R_6$ mit $R_5$ (bei $Z_2$ = C-$R_6$ und $Z_3$ = C-$R_5$) zusammen mit den jeweils benachbarten C-Atomen, woran diese Gruppen gebunden sind, ein carbocyclisches aromatisches Ringsystem oder ein heterocyclisches aromatisches 5- oder 6-gliedriges Ringsystem bilden, das ein O-, S- und/oder ein bis zwei N-Atome enthält und einen ankondensierten Benzolring oder einen weiteren heterocyclischen aromatischen 5- oder 6-gliedrigen Ring aufweisen kann, der seinerseits noch einen ankondensierten Benzolring aufweisen kann, ferner $R_1$ und $R_4$, wenn alleinstehend, unabhängig voneinander -H, eine $C_1$-$C_5$-Alkyl-, $C_1$-$C_5$-Alkoxy- oder $C_1$-$C_5$-Alkylamino-Gruppe, eine Aminogruppe, oder einen unsubstituierten oder durch nichtwasserlöslichmachende Gruppen substituierten Phenyl-, Naphthyl-, Benzylamino-, Naphthylamino- oder Phenylamino-Rest bedeuten, ferner $R_5$ -H, -CN, $C_1$-$C_5$-Alkyl, $C_7$-$C_9$-Phenylalkyl, unsubstituiertes oder durch Halogen, $C_1$-$C_5$-Alkyl, $C_1$-$C_5$-Alkoxy, -$NO_2$ oder -$CF_3$ substituiertes Phenyl oder Naphthyl, oder -$COCH_3$, unsubstituiertes oder durch Halogen, $C_1$-$C_5$-Alkyl oder $C_1$-$C_5$-Alkoxy substituiertes Benzoyl, $C_2$-$C_6$-Alkoxycarbonyl, -$CONH_2$, -CONH-$C_1$-$C_5$-Alkyl, unsubstituiertes oder durch Halogen, $C_1$-$C_5$-Alkyl oder $C_1$-$C_5$-Alkoxy substituiertes Naphthylaminocarbonyl oder Phenylaminocarbonyl ist, $R_2$, $R_3$ und $R_6$ unabhängig voneinander -H, $C_1$-$C_5$-Alkyl, -$NH_2$, $C_1$-$C_5$-Alkylamino, -OH, $C_1$-$C_5$-Alkoxy, -SH, $C_1$-$C_5$-Alkylmercapto, -CN, $C_2$-$C_6$-Alkoxycarbonyl, -$COCH_3$, -$CONH_2$, -CONH-$C_1$-$C_5$-Alkyl, oder unsubstituiertes oder durch Halogen, $C_1$-$C_5$-Alkyl oder $C_1$-$C_5$-Alkoxy substituiertes Phenyl, Naphthyl, Phenylamino, Naphthylamino, Phenylmercapto, Benzoyl, Naphthoyl oder Phenylaminocarbonyl sind, $R_7$ -H, $C_1$-$C_5$-Alkyl, oder unsubstituiertes oder durch Halogen, $C_1$-$C_5$-Alkyl oder $C_1$-$C_5$-Alkoxy substituiertes Phenyl oder Naphthyl ist, und das Metall ein zweiwertiges Ni-, Cu-, Co-, Zn-, Mn- oder Fe-Kation darstellt.

2. In der Masse gefärbtes hochmolekulares organisches Material gemäss Anspruch 1, dadurch gekennzeichnet, dass in der Formel I $R_2$ und $R_3$ unabhängig voneinander -H, $CH_3$ oder Phenyl bedeuten, $Z_2$ für den Rest C-$R_6$ steht, wobei $R_6$ -H, -$CH_3$ oder Phenyl ist, und X O ist.

3. In der Masse gefärbtes hochmolekulares organisches Material gemäss Anspruch 2, dadurch gekennzeichnet, dass $R_2$, $R_3$ und $R_6$ -H bedeuten.

4. In der Masse gefärbtes hochmolekulares organisches Material gemäss Anspruch 1, dadurch gekennzeichnet, dass das Metall ein Ni-Kation ist.

5. Metallkomplexe aus einem Liganden der Formel II

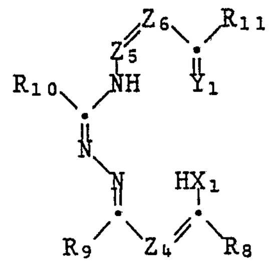

(II),

worin unabhängig voneinander $Z_4$ ein N-Atom oder die Gruppe C-$R_{12}$, $Z_5$ ein N-Atom oder die Gruppe C-$R_{13}$, und $Z_6$ bei $Z_5$ = C-$R_{13}$ ein N-Atom oder die Gruppe C-$R_{12}$ oder $Z_6$ bei $Z_5$ = N die Gruppe C-$R_{14}$ bedeuten, wobei die Gruppen $Z_5$ und $Z_6$ nicht gleichzeitig ein N-Atom sind, $X_1$ und $Y_1$ unabhängig voneinander (wenn mit $R_8$ bzw. $R_{11}$ nicht cyclisch gebunden) O, S oder NH, oder, wenn mit $R_8$ bzw. $R_{11}$ cyclisch gebunden, ein N-Atom bedeuten, ferner $Y_1$ unsubstituiertes oder durch nicht wasserlöslichmachende Gruppen substituiertes Phenylamino oder Naphthylamino ist, ferner $X_1$ mit $R_8$, $Y_1$ mit $R_{11}$, sowie $R_8$ mit $R_{12}$ (bei $Z_4$ = C-$R_{12}$), $R_{11}$ mit $R_{12}$ bzw. $R_{11}$ mit $R_{14}$ (bei $Z_6$ = C-$R_{12}$ bzw. C-$R_{14}$) und $R_{13}$ mit $R_{12}$ (bei $Z_5$ = C-$R_{13}$ und $Z_6$ = C-$R_{12}$) zusammen mit den jeweils benachbarten C-Atomen, woran diese Gruppen gebunden sind, ein carbocyclisches aromatisches Ringsystem oder ein heterocyclisches aromatisches 5- oder 6-gliedriges Ringsystem bilden, das ein O-, S- und/oder ein bis zwei N-Atome enthält und einen ankondensierten Benzolring oder einen weiteren heterocyclischen aromatischen 5- oder 6-gliedrigen Ring aufweisen kann, der seinerseits noch einen ankondensierten Benzolring aufweisen kann, ferner $R_8$ und $R_{11}$, wenn alleinstehend, unabhängig voneinander -H, eine $C_1$-$C_5$-Alkyl-, $C_1$-$C_5$-Alkoxy- oder $C_1$-$C_5$-Alkylaminogruppe, eine Aminogruppe oder einen unsubstituierten oder durch nicht wasserlöslichmachende Gruppen substituierten Phenyl-, Naphthyl-, Benzylamino-, Naphthylamino- oder Phenylamino-Rest bedeuten, ferner $R_{12}$ -H, -CN, $C_1$-$C_5$-Alkyl, $C_7$-$C_9$-Phenylalkyl, unsubstituiertes oder durch Halogen, $C_1$-$C_5$-Alkyl, $C_1$-$C_5$-Alkoxy, -$NO_2$ oder -$CF_3$ substituiertes Phenyl oder Naphthyl, oder -$COCH_3$, unsubstituiertes oder durch Halogen, $C_1$-$C_5$-Alkyl oder $C_1$-$C_5$-Alkoxy substituiertes Benzoyl, $C_2$-$C_6$-Alkoxycarbonyl, -$CONH_2$, -CONH-$C_1$-$C_5$-Alkyl, unsubstituiertes oder durch Halogen, $C_1$-$C_5$-Alkyl oder $C_1$-$C_5$-Alkoxy substituiertes Naphthylaminocarbonyl oder Phenylaminocarbonyl ist, $R_9$, $R_{10}$ und $R_{13}$ unabhängig voneinander -H, $C_1$-$C_5$-Alkyl, -$NH_2$, $C_1$-$C_5$-Alkylamino, -OH, $C_1$-$C_5$-Alkoxy, -SH, $C_1$-$C_5$-Alkylmercapto, -CN, $C_2$-$C_6$-Alkoxycarbonyl, -$COCH_3$, -$CONH_2$, -CONH-$C_1$-$C_5$-Alkyl, oder unsubstituiertes oder durch Halogen, $C_1$-$C_5$-Alkyl oder $C_1$-$C_5$-Alkoxy substituiertes Phenyl, Naphthyl, Phenylamino, Naphthylamino, Phenylmercapto, Benzoyl, Naphthoyl oder Phenylaminocarbonyl sind, $R_{14}$ -H, $C_1$-$C_5$-Alkyl, oder unsubstituiertes oder durch Halogen, $C_1$-$C_5$-Alkyl oder $C_1$-$C_5$-Alkoxy substituiertes Phenyl oder Naphthyl ist, und das Metall ein zweiwertiges Ni-, Cu-, Co-, Zn-, Mn- oder Fe-Kation darstellt, wobei, wenn $R_9$ -H, $Z_5$ C-H, $X_1$ und $Y_1$ O und $Z_4$ und $Z_6$ C-$R_{12}$ sind, und $R_8$ mit $R_{12}$ und $R_{11}$ mit $R_{12}$ zusammen mit den jeweils benachbarten C-Atomen, woran diese Gruppen gebunden sind, einen Benzol- und/oder Naphthalinrest bilden und das Metall ein zweiwertiges Ni-, Cu- und Zn-Kation ist, $R_{10}$ keine HS-, $H_3CS$-, $H_5C_2S$-, $H_7C_3S$-, $H_5C_6H_2CS$-, $H_3CCOS$-, HO-, $H_2N$- und $H_3CNH$-Gruppe darstellen darf, und wenn $R_8$ und $R_9$ -$CH_3$, $R_{10}$ -$SCH_3$, $Z_4$ und $Z_5$ C-H, $X_1$ und $Y_1$ O und $Z_6$ C-$R_{12}$ bedeuten, und $R_{11}$ mit $R_{12}$ zusammen mit den jeweils benachbarten C-Atomen, woran diese Gruppen gebunden sind, einen Benzolrest bilden, das Metall kein Nickelkation sein darf.

6. Metallkomplexe aus einem Liganden der Formel II gemäss Anspruch 5, worin $R_9$ und $R_{10}$ unabhängig voneinander -H, -$CH_3$ oder Phenyl sind, $Z_5$ für den Rest C-$R_{13}$ steht, wobei $R_{13}$ -H, -$CH_3$ oder Phenyl ist, und $X_1$ O ist.

7. Metallkomplexe aus einem Liganden der Formel II gemäss Anspruch 6, worin $R_9$, $R_{10}$ und $R_{13}$ -H bedeuten.

8. Metallkomplexe aus einem Liganden der Formel II gemäss Anspruch 5, worin das Metall ein Ni-Kation ist.

9. Metallkomplexe gemäss Anspruch 5, wobei der Ligand die Formel XXVII

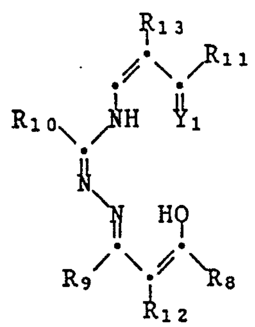

(XXVII) aufweist, worin

$R_8$, $R_9$, $R_{10}$, $R_{11}$, $R_{12}$ und $R_{13}$ sowie $Y_1$ die im Anspruch 5 angegebene Bedeutung haben und das Metall ein Nickelkation ist.

10. Metallkomplexe gemäss Anspruch 5, wobei der Ligand die Formel XXVIII

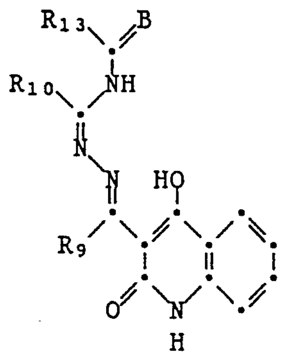

(XXVIII)

aufweist, worin

$R_9$, $R_{10}$ und $R_{13}$ unabhängig voneinander -H, $-CH_3$ oder Phenyl sind, das Metall ein zweiwertiges Ni-Kation darstellt, und B für einen Rest der Formeln

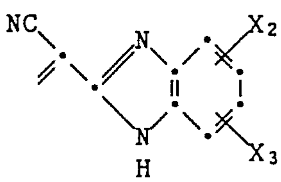 , 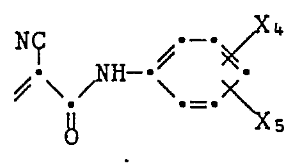 , 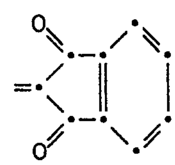 ,

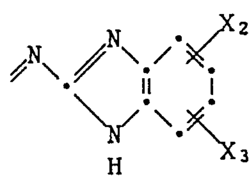 , 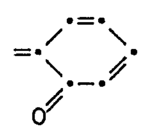 , 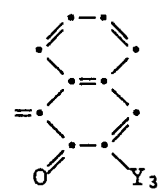 ,

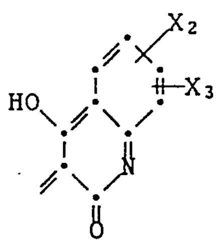 , 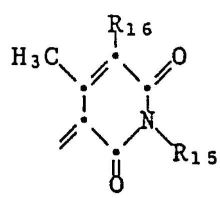 , 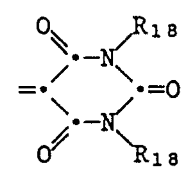 ,

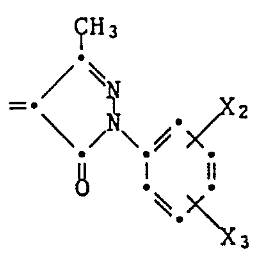 , 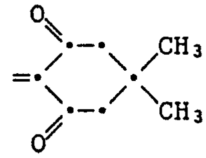 oder 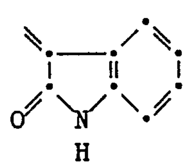

steht, wobei

$X_2$ und $X_3$ -H, -Cl, -Br, $-CH_3$ oder $-OCH_3$, $X_4$ -H, -Cl, -Br, $-NO_2$, $-CF_3$, $-CONH_2$, $-SO_2NH_2$, $-C_1$-$C_5$-Alkyl, $-C_1$-$C_5$-Alkoxy, $-SO_2NH$-$C_1$-$C_5$-Alkyl, $-NHCOC_1$-$C_5$-Alkyl, -CONH-$C_1$-$C_5$-Alkyl, $-COOC_1$-$C_5$-Alkyl, oder eine unsubstituierte oder durch -Cl, -Br oder $-CH_3$ substituierte Phenoxy-, Benzoylamino-, Phenylcarbamoyl- oder Phenylazogruppe, $X_5$ -H, -Cl, -Br, $-C_1$-$C_5$-Alkyl oder $-C_1$-$C_5$-Alkoxy, $Y_3$ -H, -COOH, $-CONH_2$, $-COOC_1$-$C_5$-Alkyl, $-CONHC_1$-$C_5$-Alkyl, oder eine unsubstituierte oder durch Halogenatome und/oder $C_1$-$C_5$-Alkyl und/oder $C_1$-$C_5$-Alkoxygruppen substituierte Phenylcarbamoyl gruppe, $R_{15}$ -H oder $-C_1$-$C_5$-Alkyl, $R_{16}$ $-CH_3$, $-CONHC_1$-$C_5$-Alkyl oder $-CONH_2$, und $R_{18}$ -H, $-C_1$-$C_5$-Alkyl oder unsubstituiertes

oder durch -Cl oder -$CH_3$ substituiertes Phenyl bedeuten.

11. Metallkomplexe aus einem Liganden der Formel XXVIII gemäss Anspruch 10, wobei $R_9$, $R_{10}$ und $R_{13}$ -H sind, und B für einen Rest der im Anspruch 10 angegebenen Formeln steht, wobei $X_2$ und $X_3$ -H, -Cl oder -$CH_3$, $X_4$ -H, -Cl, -$CF_3$, -$CONH_2$, -$CH_3$, -$OCH_3$, -$NHCOCH_3$, -$COOCH_3$, -$COOC_2H_5$ oder -$NHCOC_6H_5$, $X_5$ -H, -Cl, -$CH_3$ oder -$OCH_3$, $Y_3$ -H, unsubstituiertes oder durch -Cl und/oder -$CH_3$ und/oder -$OCH_3$ substituiertes Phenylcarbamoyl, $R_{15}$ -H, -$CH_3$ oder -$C_2H_5$, $R_{16}$ -CN, und $R_{18}$ -H oder -$CH_3$ bedeuten.

12. Metallkomplexe aus einem Liganden der Formel XXVIII gemäss Anspruch 10, wobei $R_9$, $R_{10}$ und $R_{13}$ unabhängig voneinander -H, -$CH_3$ oder Phenyl sind, und B für einen Rest der Formeln

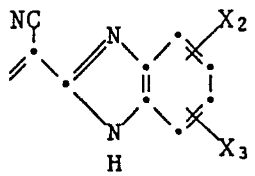 , 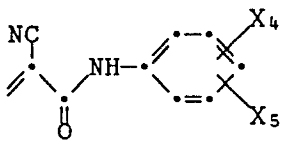 ,

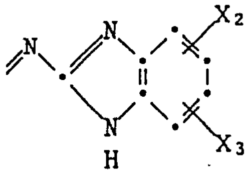 , 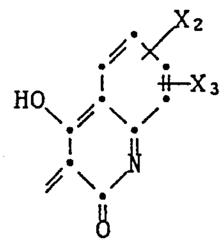 , 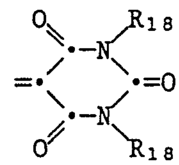 und .

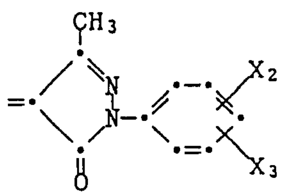

steht, worin

$X_2$, $X_3$, $X_4$, $X_5$ und $R_{18}$ die im Anspruch 10 angegebenen Bedeutungen haben.